(19) Europäisches Patentamt / European Patent Office / Office européen des brevets

(11) **EP 2 959 620 B1**

(12) **EUROPEAN PATENT SPECIFICATION**

(45) Date of publication and mention
of the grant of the patent:
**29.08.2018 Bulletin 2018/35**

(21) Application number: **14721818.4**

(22) Date of filing: **30.04.2014**

(51) Int Cl.:
*H04L 1/00* (2006.01)     *H04L 1/20* (2006.01)

(86) International application number:
**PCT/EP2014/058794**

(87) International publication number:
**WO 2015/165514 (05.11.2015 Gazette 2015/44)**

(54) **METHOD AND APPARATUS FOR ENHANCED SLOW LINK ADAPTATION IN A WIRELESS COMMUNICATION SYSTEM**

VERFAHREN UND VORRICHTUNG ZUR VERBESSERTEN LANGSAMEN VERBINDUNGSADAPTION IN EINEM DRAHTLOSKOMMUNIKATIONSSYSTEM

PROCÉDÉ ET APPAREIL D'ADAPTATION DE LIAISON LENTE AMÉLIORÉE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2015 Bulletin 2015/53**

(73) Proprietor: **Huawei Technologies Co. Ltd. Shenzhen, Guangdong 518129 (CN)**

(72) Inventors:
• **HU, Sha**
  **S-16440 Kista (SE)**
• **RUSEK, Fredrik**
  **S-223 69 Lund (SE)**
• **CHEN, Jianjun**
  **S-223 69 Lund (SE)**
• **WU, Gengshi**
  **S-16440 Kista (SE)**

(74) Representative: **Gill Jennings & Every LLP
The Broadgate Tower
20 Primrose Street
London EC2A 2ES (GB)**

(56) References cited:
• **TAO TAO ET AL: "Combined fast link adaptation algorithm in LTE systems", COMMUNICATIONS AND NETWORKING IN CHINA (CHINACOM), 2011 6TH INTERNATIONAL ICST CONFERENCE ON, IEEE, 17 August 2011 (2011-08-17), pages 415-420, XP032119942, DOI: 10.1109/CHINACOM.2011.6158190 ISBN: 978-1-4577-0100-9**
• **TOBIAS LINDSTRÃ M JENSEN ET AL: "Fast Link Adaptation for MIMO OFDM", IEEE TRANSACTIONS ON VEHICULAR TECHNOLOGY, IEEE SERVICE CENTER, PISCATAWAY, NJ, US, vol. 59, no. 8, 1 October 2010 (2010-10-01), pages 3766-3778, XP011311918, ISSN: 0018-9545**

**Description**

TECHNICAL FIELD

The aspects of the present disclosure relate generally to wireless communication systems and in particular to link adaptation techniques.

BACKGROUND

The proliferation of modern wireless communications devices, such as cell phones, smart phones, and tablet devices, has seen an attendant rise in demand for large multimedia data capabilities. These can include streaming radio, multimedia online gaming, streaming music, and TV at the user equipment (UE) or mobile station (MS). To support this ever increasing demand for higher data rates, new communications standards are being developed based on technologies, such as multiple input and multiple output (MIMO), Orthogonal Frequency Division Multiple Access (OFDMA, and bit interleave coded modulation (BICM). Examples of these standards include Long Term Evolution (LTE) and LTE-Advanced (LTE-A) being developed by the third generation partnership project (3GPP), the 802.11 and 802.16 family of wireless broadband standards maintained by the Institute of Electric and Electronic Engineers (IEEE), WiMAX, an implementation of the IEEE 802.11 standard from the WiMAX Forum, as well as others.

Many of the modern communication systems include provisions for a receiver, such as a UE or MS in a downlink transmission or an eNodeB during uplink, to send channel state information (CSI) back to the transmitter so the transmitter can adjust system parameters to maximize the throughput of the radio frequency (RF) link. A transmitter can adapt link parameters such as the modulation and coding scheme (MCS), rank, pre-coding matrices, and transmit power in accordance with the CSI to increase throughput and robustness of data transmissions. Because of their effectiveness, link adaptation (LA), also known as adaptive modulation and coding (AMC), has found wide use in wireless communication systems.

Typical LA systems feature two types of link adaptation loops. Fast link adaptation (FLA) is used as inner loop link adaptation (ILLA) to quickly react to changes in short term channel conditions such as fast fading scenarios and interference. Slow link adaptation (SLA) is used in an outer loop link adaptation (OLLA) to improve performance in situations where FLA is not operating efficiently.

In modern wireless standards such as the air interfaces defined in UMTS and LTE/LTE-A, FLA is used to select a channel quality indicator (CQI) at the receiver and send the selected CQI back to the transmitter where it is used to select a MCS to be used in subsequent transmissions. Typical receivers select CQI using a mapping from a measured signal to interference plus noise ratio (SINR) to the most appropriate MCS. The CQI is an index corresponding to one of the available MCS where a higher CQI corresponds to higher throughput MCS. The terms CQI and MCS may be used interchangeably herein.

These mappings of measured SINR to CQI have several limitations, such as impairment of the SINR estimation, inaccurate SINR to CQI mapping, uplink reporting delay, etc., and therefore cannot always provide efficient FLA. To handle situations where FLA is not able to provide appropriate LA, SLA may be added in an OLLA to improve overall LA performance.

SLA is used as an OLLA to adjust the CQI selected by the FLA based ILLA in order to meet a certain block error rate (BLER) target. The BLER target is chosen to provide optimal data transmission performance and depends on system configuration details such as whether a retransmission mechanism like hybrid automatic repeat requests (HARQ) is employed. In LTE with HARQ activated, the BLER target is usually set to 10%. Including a SLA based OLLA can improve data throughput and provide protection from systematic error conditions which can occur when the FLA does not work efficiently. For instance, when the SINR to CQI mapping being used by FLA does not match well with current channel conditions, the BLER can become very high and, if no SLA based OLLA is included, data throughput can be dramatically degraded. FLA is typically implemented at the receiver side, while SLA can be implemented at either the receiver or transmitter.

Current link adaptation methods typically include both a FLA based ILLA and a SLA based OLLA where FLA may be implemented using several different mapping methods such as exponential effective signal to noise ratio (SNR) mapping (EESM), mean mutual information per bit (MMIB), and received block information rate (RBIR). Similarly, SLA can also be implemented in a variety of ways and choose different parameters for selection by the SLA algorithms. Several parameters may be used in the OLLA such as SINR, SINR to CQI mapping thresholds, and CQI index. However, two factors are not taken into account by these prior art SLA techniques. In prior art SLA techniques, a pre-defined BLER target needs to be set. For example, in LTE the pre-defined BLER value is usually 0.1 or 10%. Using a fixed pre-defined BLER target may be optimal in a general sense but is not always optimal for each specific channel condition that a UE may be experiencing at the time data transmission occurs. In addition to using a pre-defined BLER target, acknowledgement (ACK) / negative-acknowledgement (NAK) information is used as a basis for SLA adaptation. But since only past information is used, when the CQI feedback delay or the UE velocity increases, the CQI currently chosen by the link adaptation algorithms may be invalid at the time the CQI is utilized by the transmitter. Furthermore, when SINR and RBIR become independent the predicted CQI will not work efficiently and a constant CQI can provide better throughput for certain specific channel conditions.

Accordingly, it would be desirable to provide LA techniques that can solve at least some of the problems outlined above.

Tao Tao et al: "Combined fast link adaption algorithm in LTE systems", Communications and Networking in China (CHINACOM), 2011 6th International ICST Confernece on, IEEE, 17 August 2011 (2011-08-17), pages 41-420, describes that the Fast Link Adaption (FLA) algorithm is implemented as Channel Quality Indicator (CQI) selection technique in the 3GPP Long Term Evolution (LTE) system. The presented FLA algorithms are Exponential Effective SNR Mapping (EESM) and Mean Mutual Information per coded Bit (MMIB) which utilize the post-processing Signal-to-Interference plus Noise Ratios (SINR) to compute the effective Signal-to-Noise Ratio (SNR) and mean Mutual Information (MI) as Link Quality Metric (LQM), respectively. The throughput performance of investigated FLA algorithms are presented in this paper. A joint FLA algorithm is described which combines EESM and MMIB algorithms.

SUMMARY

On the above background it is an object of the present invention to provide an apparatus and methods by means of which it is possible to improve data transmission rates in a communication link which employs link adaptation feedback, in particular, but not exclusively, for selecting CSI at either a receiver or a transmitter.

The foregoing and other objects are achieved by the features of the independent claims. Further implementation forms are apparent from the dependent claims, the description and the figures. Various aspects are set out in the appended claims.

According to a first aspect, a transceiver operable for selecting channel state information, CSI, of a communication link wherein the transceiver comprises: a radio frequency, RF, unit configured to receive a communication signal from the communication link and produce a received data signal; a processing apparatus coupled to the RF unit and configured to receive the data signal; and a memory coupled to the processing apparatus, wherein the processing apparatus is configured to: generate channel estimates a cyclic redundancy check, CRC, result and transmission parameter information including a channel quality indicator, CQ1, and a rank indication, RI, based on the data signal ; and, generate with a fast link adaptation, FLA, algorithm a FLA CSI and an estimated received block information rate, RBIR, correlation value based on the channel estimates, wherein the FLA algorithm is configured to compute a RBIR for each modulation and coding scheme, MCS, in an employed set of MCS, and generate the FLA CSI and the estimated RBIR correlation value based the computed RBIR; characterised in that the processing apparatus is further configured to: generate with a first stage enhanced slow link adaptation, ESLA, algorithm a filtered CSI based on the FLA CSI, a first stage block error rate, BLER, target, and the CRC result, wherein the first stage ESLA algorithm is configured to compute a CSI adjusting factor based on the CRC result and the first stage BLER target, and combine the CSI adjusting factor with the FLA CSI to obtain the filtered CSI; update a CSI history buffer wherein the CSI history buffer comprises a first predetermined number of past filtered CSI values; update a CRC history buffer wherein the CRC history buffer comprises a first predetermined number of past CRC results; generate with a second stage ESLA algorithm an output CSI based on the transmission parameter information and the filtered CSI, and the CSI history buffer, wherein the second stage ESLA algorithm is configured to select a CSI filter parameter from a set of predetermined filter constants based on the CSI history buffer, and to compute an output CSI based on the selected CSI filter parameter wherein the FLA algorithm is configured to generate a predicted RBIR based on the computed RBIR, and select the first CSI based on the predicted RBIR and the CRC information; and; wherein the second stage ESLA algorithm is activated when the RBIR correlation is above a predetermined threshold value, and bypassed when the RBIR correlation is not greater than the predetermined threshold; and adjust the first stage BLER target with a BLER target tracking algorithm based on the CSI history buffer and the CRC history buffer, wherein the BLER target tracking algorithm is configured to calculate a set of link throughput values corresponding to a set of CSI values, select the maximum link throughput from the set of link throughput values calculate an expected BLER based on the selected maximum link throughput and the CRC history buffer, and adjust the first stage BLER target based on the expected BLER and a free tracking parameter, wherein the processing apparatus is configured to perform a rank indication (RI) post process, and wherein the RI post process is configured to: obtain a RI from the FLA CSI; apply hysteresis to the obtained RI to create an output RI; and activate a Slow Link Adaptor (SLA) reset flag when the output RI is different than a previous output RI,wherein activating the SLA reset flag: resets the CSI adjusting factor to zero;clears the CSI history buffer; clears the CRC history buffer; and sets the working BLER to a predetermined starting BLER.

In a first possible implementation form of the transceiver according to the first aspect as such or to the second or third implementation forms of the first aspect, a long term CSI statistic and a short term CSI statistic are determined based on the CSI history buffer, and the second stage ESLA algorithm is configured to select the output CSI based on the short term CSI statistic and the long term CSI statistic. The long term CSI statistic corresponds to the most commonly used CSI during the first predetermined number of CSI values in the CSI history buffer, the short term CSI statistic corresponds to the most commonly used CSI during a second predetermined number of CSI values in the CSI history buffer, where the first predetermined number is larger than the second predetermined number.

In a second possible implementation form of the transceiver according to the first possible implementation form of the first aspect, the second stage ESLA algorithm is configured to set the CSI filter parameter to a first predetermined filter constant when the short term CSI statistic is equal to the long term CSI statistic, set the CSI filter parameter to a second predetermined filter constant when the short term CSI statistic is not equal to the long term CSI statistic, and adjust the output CSI based on the CSI filter parameter.

In a third possible implementation form of the transceiver according to the first aspect as such or to any of the preceding first through second possible implementation forms of the first aspect, the BLER tracking algorithm determines a first throughput based on the long term CSI statistic and the CRC history buffer, selects a next lower CSI and determines a second throughput based on the next lower CSI and the CRC history buffer, selects a next higher CSI and determines a third throughput based on the next higher CSI and the CRC history buffer. The maximum throughput is selected from the determined first throughput, the second throughput, and the third throughput, and an expected BLER corresponding to the maximum throughput is selected. A working BLER target is computed based on the expected BLER and a predetermined tracking constant, and the first stage BLER target is adjusted based on the working BLER.

In a fourth possible implementation form of the transceiver according to the third possible implementation form of the first aspect, the first stage BLER target is obtained by constraining the working BLER between a predetermined minimum target BLER and a predetermined maximum target BLER.

In a fifth possible implementation form of the transceiver according to the first aspect, when the CRC result is a pass the CSI adjusting factor is increased and when the CRC result is a fail the CSI adjusting factor is decreased.

In a sixth possible implementation form of the transceiver according to the first aspect as such or to any of the preceding first through fifth possible implementation forms of the first aspect, when the selected rank indication (RI) has been used to transmit the communication signal the FLA CSI is entered into the CSI history buffer and when the selected RI is different than the RI used to transmit the communication signal a RI flag value is entered into the CSI history buffer, where the RI flag value indicates the value should be excluded from any calculations involving the CSI history buffer.

In an seventh possible implementation form of the transceiver according to the first aspect as such or to any of the preceding first through sixth possible implementation forms of the first aspect, the output CSI comprises one or more values selected from the group comprising a wide-band channel quality indicator (CQI), a sub-band CQI, a rank indicator, and a pre-coding matrix indicator.

According to a second aspect, a method for selecting channel state information, CSI, in a wireless transceiver, the method comprising: generating channel estimates, a cyclic redundancy check, CRC, result and transmission parameter information including a channel quality indicator, CQI, and a rank indication, RI, based on the received radio frequency signal generating with a fast link adaptation, FLA, algorithm a FLA CSI and an estimated received block information rate, RBIR, correlation value based on the channel estimates, wherein the FLA algorithm is configured to: compute a RBIR for each MCS in an employed set of MCS, and generate the FLA CSI and the estimated RBIR correlation value based on the calculated RBIR; characterised by: generating with a first stage enhanced slow link adaptation, ESLA, algorithm, a filtered CSI based on the FLA CSI, a first stage block error rate, BLER, target, and the CRC result, wherein the first stage ESLA algorithm is configured to compute a CSI adjusting factor based on the CRC result and the first stage BLER target, and combine the FLA CSI and the CSI adjusting factor to select the filtered CSI; updating a CSI history buffer wherein the CSI history buffer comprises a first predetermined number of past filtered CSI values; updating a CRC history buffer wherein the CRC history buffer comprises the first predetermined number of past CRC results; generating with a second stage ESLA algorithm an output CSI based on the transmission parameter information and the filtered CSI, the CRC results, and the CSI history buffer, wherein the second stage ESLA algorithm is configured to select a CSI filter parameter from a set of predetermined filter constants based on the CSI history buffer, and to compute an output CSI based on the selected CSI filter parameter wherein the FLA algorithm is configured to generate a predicted RBIR based on the computed RBIR, and select the first CSI based on the predicted RBIR and the CRC information; and; wherein the second stage ESLA algorithm is activated when the RBIR correlation is above a predetermined threshold value, and bypassed when the RBIR correlation is not greater than the predetermined threshold; and adjusting the first stage BLER target with a BLER target tracking algorithm based on the CSI history buffer and the CRC history buffer, wherein the BLER target tracking stage is configured to calculate a set of link throughput values corresponding to a set of CSI values, select the maximum link throughput from the set of calculated link throughput values, calculate an expected BLER based on the calculated maximum link throughput and the CRC history buffer, and adjust the first stage BLER target based on the expected BLER and a free tracking parameter, wherein the method comprises a rank indication (RI) Post Process, and wherein the RI post process is configured to: obtain a RI from the FLA CSI; apply hysteresis to the obtained RI to create an output RI; and activate a SLA reset flag when the output RI is different than a previous output RI, and wherein activating the SLA reset flag: resets the CSI adjusting factor to zero;clears the CSI history buffer; clears the CRC history buffer; and sets the working BLER to a predetermined starting BLER.

BRIEF DESCRIPTION OF THE DRAWINGS

In the drawings:

Figure 1 illustrates a pictorial depiction of a typical radio network.
Figure 2 illustrates a block diagram 200 showing the basic processes used in closed loop link adaptation incorporating aspects of the present disclosure.
Figure 3 illustrates a block diagram of an ESLA based CSI reporting technique incorporating aspects of the disclosed embodiments.
Figure 4 illustrates a block diagram of a FLA process incorporating aspects of the disclosed embodiments.
Figure 5 illustrates a graph showing a mapping of RBIR to BLER incorporating aspects of the present disclosure.
Figure 6 illustrates a flow chart of a RI post process incorporating aspects of the disclosed embodiments.
Figure 7 illustrates a flowchart of an exemplary first stage ESLA process incorporating aspects of the disclosed embodiments.
Figure 8 illustrates a graph of measured RBIR versus subframe incorporating aspects of the present disclosure.
Figure 9 illustrates a graph of normalized RBIR correlation for channel under extended pedestrian A model incorporating aspects of the present disclosure.
Figure 10 illustrates a flow chart of an exemplary second stage ESLA process incorporating aspects of the disclosed embodiments.
Figure 11 illustrates a flow chart of an exemplary BLER target tracking process incorporating aspects of the disclosed embodiments.
Figure 12 illustrates graphs showing simulated throughput and BLER performance of a system incorporating an ESLA CQI reporting algorithm incorporating aspects of the present disclosure.
Figure 13 illustrates graphs showing the feedback probability for CQI indices incorporating aspects of the present disclosure.
Figure 14 illustrates graphs showing throughput of a system incorporating an ESLA CQI reporting algorithm incorporating aspects of the present disclosure.
Figure 15 illustrates a block diagram of an apparatus for wireless communications incorporating aspects of the disclosed embodiments.

DETAILED DESCRIPTION OF THE DISCLOSED EMBODIMENTS

The embodiments disclosed herein avoid many of the problems of the prior art by employing novel enhanced slow link adaptation (ESLA) techniques including multiple stages of ESLA along with BLER tracking.
The novel enhanced SLA (ESLA) techniques disclosed herein are illustrated using concrete examples of LTE/LTE-A type systems, however those skilled in the art will readily recognize that the disclosed ESLA techniques and apparatus may be applied in other types of wireless system which include CSI feedback from a receiver to the transmitter. For example other systems appropriate for application of the disclosed ESLA techniques and apparatus include GPRS, UMTS, W-LAN, WCDMA, etc. Some of the disclosed embodiments illustrate SLA implemented at the UE side. Alternatively, the disclosed ESLA techniques and apparatus may be advantageously employed at other mobile stations or radio base stations such as an eNodeB in LTE and LTE-A type systems where all necessary information can be reported to the eNodeB through the uplink transmission.
In one embodiment, illustrated using terminology from LTE, the ESLA algorithm can be summarized as follows:

•    A FLA based ILLA, which includes a RBIR prediction unit, is used to select the best pre-coding matrix indicator (PMI), rank indicator (RI), and CQI;
•    A normalized RBIR correlation is estimated based on the predicted RBIR values generated during the FLA.
•    A first stage of ESLA is used to adjust the CQI selection based on and constrained by a BLER target received from a BLER tracking unit;
•    When the estimated RBIR correlation is below a pre-defined threshold value, a second stage of ESLA is activated to boost SLA performance, otherwise the second stage of ESLA is deactivated;
•    A BLER target tracking module is used to adaptively adjust the BLER target used by the first stage of ESLA.

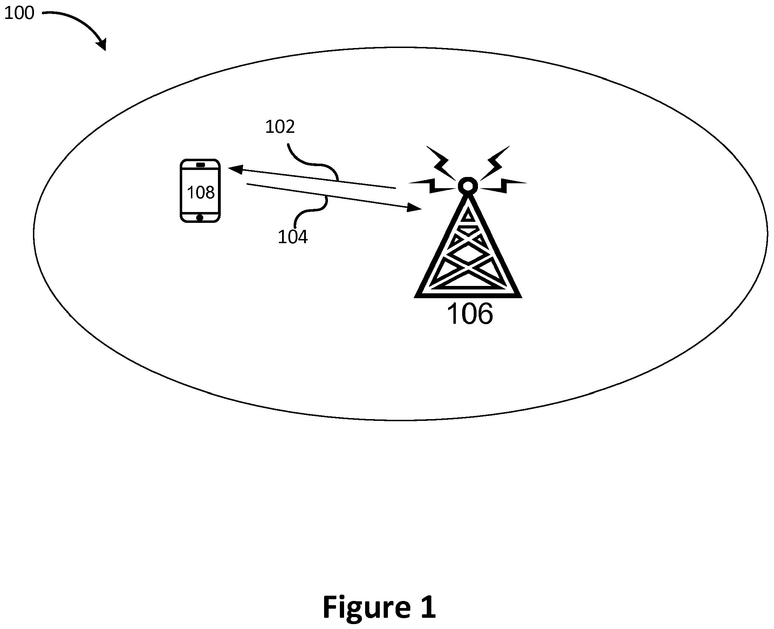

Figure 1 illustrates a pictorial depiction of a typical radio network 100. The radio network 100 includes a radio base station 106 which in the illustrated radio network 100 is an evolved node B (eNodeB) type radio base station. The radio base station 106 is in communication with one or more pieces of user equipment (UE) 108. While Figure 1 illustrates a single radio base station 106 and a single UE 108 it should be understood that the radio network 100 may include any number of radio base stations 106 and UE 108. Each UE 108 in the radio network 100 receives data from the eNodeB 106 over a down link (DL) 102 and transmits data to the eNodeB 106 over an up link (UL) 104. For link adaptation, a feedback loop is implemented where the UE 108 receives data over the DL 102, evaluates channel quality by using reference signals or pilot symbols embedded in the received data, then selects appropriate CSI feedback values, which in an LTE type network include CQI, RI, and PMI, based on the current and/or past link quality evaluations. It has been shown that significant improvements in downlink throughput can be achieved through the careful selection of CSI feedback values. As will be discussed further below, using FLA techniques in conjunction with multiple stages of SLA can improve both throughput and robustness of downlink transmissions. CSI feedback values are selected by the UE 108 and sent to the radio base station 106 over an UL 104. The radio base station 106 then uses the CSI values received from the UE 108 via the UL 104 to adapt link parameters, such as MCS, rank, transmit power, etc., for use in subsequent transmissions to the UE 108 over the DL 102.

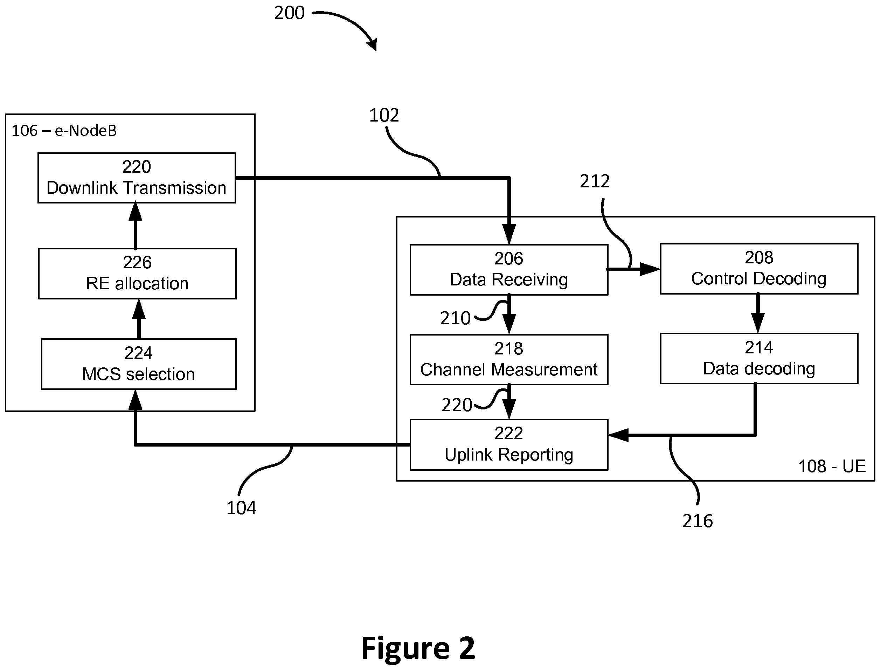

Figure 2 illustrates a block diagram 200 showing the basic processes used in closed loop link adaptation. A receiver, such as UE 106, receives a data signal 206 from a down link 102. A demodulation and decoding process 206 separates cell reference signals 210, which in certain embodiments may be pilot symbols, and data symbols 212. The control channel data is decoded 208 to extract control information. The transmitted data is decoded 214 to extract the transmitted data along with transmission status information 216 such as cyclic redundancy check (CRC) results, also referred to herein as ACK/NAK information. Channel quality metrics 220 such as SINR or mutual information MI are computed 218 and provided along with the status information 216 to an uplink reporting process 222 which selects CSI values to be sent to the transmitter 106 over the UL 104. The selected CSI may include for example CQI, PMI, and RI as used in LTE/LTE-A systems or may include other appropriate CSI feedback. The transmitter 106 receives the CSI over the UL 104 where it is used along with the transmitter's own configuration to adjust 224 the transmission scheme which for example may include selection of a MCS. The data and selected CQI, RI, PMI, and HARQ information are allocated to resource elements 226 then coded and modulated 228 for transmission over the DL 102. It should be noted that there is a delay between receiving CSI from a UE 108 and using the updated transmission scheme for a DL transmission due to decoding and processing latency in the transmitter 106 and receiver 108. As used herein the term process may be used interchangeably with the term algorithm as each process implements a corresponding algorithm to achieve the desired purpose.

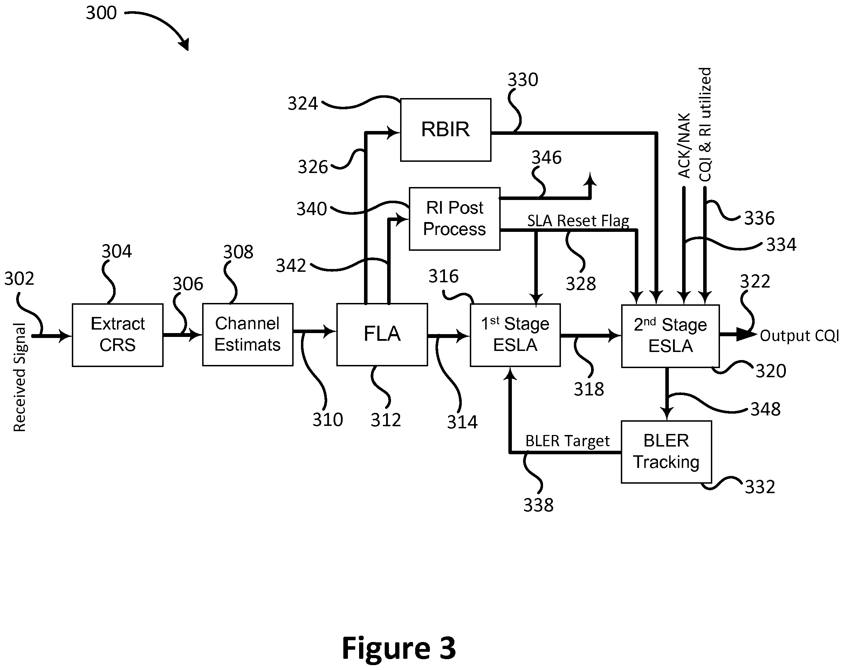

A block diagram of an ESLA based CQI reporting technique 300 is illustrated in Figure 3. Cell reference signals (CRS) 306, such a pilot symbols, are extracted 304 from a received signal 302, then a channel estimator 308 computes channel estimates 310 for input to a FLA process 312. The ESLA based CQI scheme 300 includes three link adaptation processes: a FLA 312 process that receives the channel estimates 310 and produces an initial CQI recommendation 314; a first stage ESLA process 316 further refines the initial CQI recommendation 314 to produce a first stage CQI estimate (*CQI_SLA*1) 318; and a second stage ESLA process 320 provides further filtering of the first stage CQI estimate 318 and produces a final recommended CQI (*CQI_SLA*2) 322 that may be returned to a transmitter such as an eNodeB (not shown) where it can be used to adapt link parameters such as the MCS. When an RBIR correlation 326 falls below a pre-determined threshold value, it indicates that the channel conditions are changing rapidly and a second stage of ELSA 320 needs to be activated to filter the first stage CQI estimate *CQI_SLA*1 318. The second stage ESLA process 320 is activated (or deactivated) by a CQI filter flag (CFF) 330 generated by a RBIR process 324. The RBIR process 324 receives a RBIR correlation signal 326 from the FLA process 312 and produces the CFF 330 which is provided as an input to the second stage ESLA process 320. The second stage ESLA process 320 also receives status and control information contained in the received signal 302 including ACK/NAK information 334 and the CQI and RI 336 used during transmission of the received signal 302. As will be discussed further below, the first stage ESLA process 316 and second stage ESLA process 320 include state values and parameters that need to be reset under certain conditions such as when the rank of the transmitted signal changes. To facilitate resetting of the first 316 and second 320 stage ESLA process a RI post process 340 receives a RI value 342 from the FLA process 312 and produces a SLA reset flag (SRF) 328 which is provided to both the first 316 and second 320 stage ESLA processes. The RI post process 340 also produces a final recommended RI estimate 346 that is returned to the transmitter (not shown) in certain embodiments. Use of a constant BLER target does not always provide optimal results, so the exemplary ESLA based CQI reporting technique 300 includes a BLER target tracking process 332 that received long term and short term CQI statistics 348 from the second stage ESLA process 320 and generates a BLER target 338 for the first stage ESLA process 316. Alternatively, the BLER target tracking process 332 may generate its own CQI statistics thereby removing the requirement to receive the CQI statistics 348 from the second stage ESLA process 320. As an aid to understanding, the ESLA process 300 can be organized into six processes as follows:

- a FLA process 312 that produces an initial CQI estimate 314;
- a first stage of ESLA 316 that refines the initial CQI estimate 314;

- a second stage of ESLA 320 that is used to improve link throughput when the RBIR correlation 326 is below a pre-defined threshold value;
- a BLER tracking process 332 that adapts the BLER target 338 used by the first stage ESLA process 316;
- an RBIR process 324 that uses a RBIR correlation signal to generate a CFF 330 based on the RBIR correlation signal 326; and
- a RI post process 340 used to control resetting of the first 316 and second 320 stage ESLA processes based on the RI recommendation 342 from the FLA process 312.

It should be noted the above organization of the ESLA process 300 into six sub processes is provided as an aide to understanding. It should be noted that throughout the remainder of this disclosure references will be made to the processes in Figure 3 by process number without specifically referring to Figure 3.

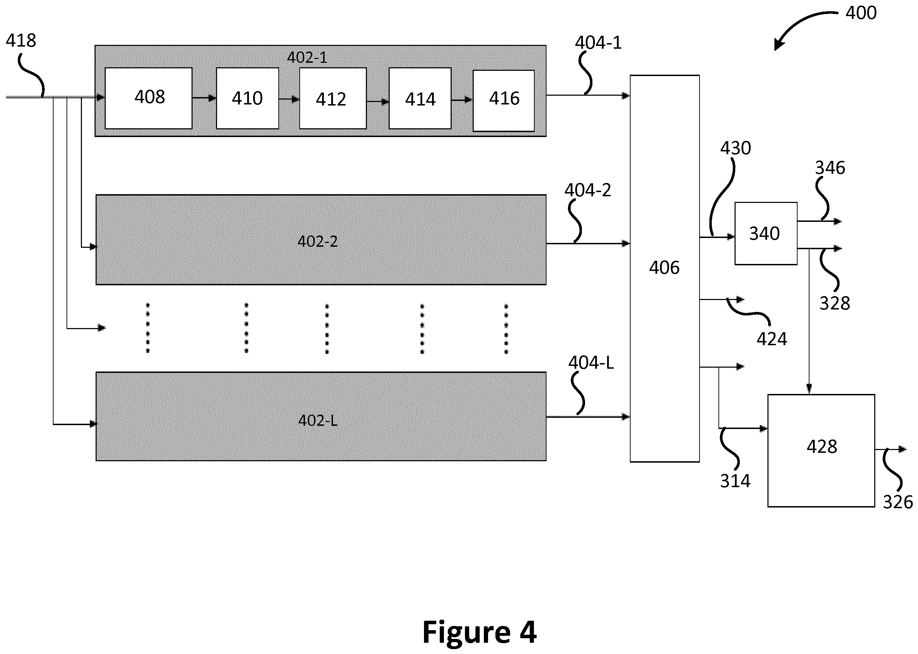

Figure 4 illustrates a block diagram of an exemplary FLA algorithm 400 that is appropriate for use in FLA process 312 of the ESLA process 300 described above. The FLA algorithm 400 relies on a RBIR, which is also sometimes referred to as normalized mutual information per bit, as a link performance metric because it provides a good tradeoff between performance and complexity. Alternatively other FLA methods relying on other performance metrics, such as exponential effective SINR mapping (EESM), mean mutual information per bit (MMIB), or other appropriate FLA techniques, may also be advantageously employed. The illustrated FLA algorithm 400 includes a set of Rank processes 402-1, 402-2, through 402-L, where there is a separate Rank process 402-n for each rank index assumption being considered. In the illustrated FLA algorithm 400, L is the number of considered rank index assumptions. Channel estimates 418 are received by each Rank process 402-1, 402-2, through 402-L. The channel estimates 418 may be generated by any appropriate technique, such as for example pilot symbol assisted channel estimation using linear minimum mean square error (LMMSE) estimation. The FLA algorithm 400 produces CSI, which in the illustrated LTE embodiment includes RI (430), PMI 424, and CQI (314), along with other information, such as an SLA reset flag (SRF) 328 and RBIR correlation 326, which are used in certain embodiments to control downstream ESLA processes. All Rank process 402 are the same for each rank assumption and include a number of steps resulting in a set of selected CQI 404-1, 404-2, 404-L for each rank assumption. Each Rank process 402 begins by calculating SINR and RBIR 408 based on the received channel estimates 418, and a PMI is selected 410 based on the results of the SINR and RBIR calculation 408. A buffer, or dictionary, containing past RBIR information is updated 412 using current RBIR data calculated 410 from the channel estimates 418. Next RBIR predictions are estimated 414 and used to select 416 the best CQI for the particular rank assumption. The selected CQI for each rank assumption 404-1, 404-2, through 404-L, selected by each Rank process, 402-1, 402-2, 402-L, are used by an RI selection process 406 to select the RI 342 that maximizes total throughput of the link. The RI selection process 406 also selects an associated PMI 424, and CQI 314. A RI post process 340 uses the selected RI 342 to generate a SRF 328 and final recommended RI estimate 346. An RBIR process 428 then uses the selected RI and CQI to generate a RBIR correlation 326.

Calculation of the RBIR is the same for each rank index (RI) assumption and may be described as follows. The received signal at OFDM symbol n of subcarrier k can be expressed by equation (eq.1):

$$y_{k,n} = H_{k,n}W_{k,n}x_{k,n} + n_{k,n}, \qquad (eq.1)$$

where $x_{k,n}=(x_{k,n}(1), x_{k,n}(2), ..., x_{k,n}(L))^T$ is an $L \times 1$ vector comprising the transmitted data symbols, $n_{k,n}$ is a $N_R \times 1$ vector of complex Gaussian noise with zero mean and covariance matrix $\sigma^2 I$, $y_{k,n}$ is a $N_R \times 1$ vector of the received data symbols, $H_{k,n}$ is the $N_R \times N_T$ channel matrix that is estimated through cell reference signals (CRS) also known as pilot symbols or pilots. $W_{k,n}$ is the $N_T \times L$ effective pre-coding matrix that may include a pre-coder, circular delay diversity matrix, and a large delay diversity matrix, and is known at receiver side for a given transmission mode and PMI. Here $L$ is the number of layers, $N_T$ is the number of transmit antennas and $N_R$ is the number of receive antennas. The transmitted symbol $x_{k,n}$ can be estimated using a normalized LMMSE filter as shown in equation (eq.2):

$$\tilde{x}_{k,n} = Fy_{k,n} = \frac{W_{k,n}^H H_{k,n}^H \left( H_{k,n} W_{k,n} W_{k,n}^H H_{k,n}^H + \sigma^2 I \right)^{-1}}{diag \left( W_{k,n}^H H_{k,n}^H \left( H_{k,n} W_{k,n} W_{k,n}^H H_{k,n}^H + \sigma^2 I \right)^{-1} H_{k,n} W_{k,n} \right)} y_{k,n}$$

$$= \frac{W_{k,n}^H H_{k,n}^H \left( H_{k,n} W_{k,n} W_{k,n}^H H_{k,n}^H + \sigma^2 I \right)^{-1}}{diag \left( W_{k,n}^H H_{k,n}^H \left( H_{k,n} W_{k,n} W_{k,n}^H H_{k,n}^H + \sigma^2 I \right)^{-1} H_{k,n} W_{k,n} \right)} \left( H_{k,n} W_{k,n} x_{k,n} + n_{k,n} \right) \qquad (eq.2)$$

In equation (eq.2) the *diag*(•) operator generates a diagonal matrix with the same main diagonal elements as the original matrix and all remaining elements set to zero, and the super script H represents the Hermitian transpose and super script T represents the normal transpose. For each transmitted symbol, $x_{k,n}(l)$, where *l* is the layer number and $1 \in (0 < l \le L)$, the estimation of equation (eq.2) can be rewritten as equation (eq.3):

$$\tilde{x}_{k,n}(l) = x_{k,n}(l) + \tilde{n}_{k,n}(l). \quad (\text{eq.3})$$

The noise term $\tilde{n}_{k,n}(l)$ absorbs filter noise and residual spatial interference between the data symbols and is assumed to be independent across different layers. Assuming the power of each transmitted symbol $x_{k,n}(l)$ is normalized to one (1), the channel can be qualitatively quantified through the individual SINR as shown in equation (eq.4):

$$\gamma_{k,n}(l) \triangleq \frac{\mathrm{E}\left\{\left|x_{k,n}(l)\right|^2\right\}}{\mathrm{E}\left\{\left|\tilde{n}_{k,n}(l)\right|^2\right\}} = \frac{1}{\mathrm{E}\left\{\left|\tilde{n}_{k,n}(l)\right|^2\right\}}, \quad 0 < l \le L. \quad (\text{eq.4})$$

The SINRs $\gamma_{k,n}(l)$ for each different symbol and subcarrier combination within a subframe may then be mapped into a single scalar SINR value that represents the channel quality.

The RBIR of layer 1 is calculated using equation (eql5):

$$RBIR(l) = \frac{1}{KN}\sum_{k=0}^{K-1}\sum_{n=0}^{N-1} I\left(\gamma_{k,n}(l)\right). \quad (\text{eq.5})$$

In equation (eq.5) $I(•)$ is a function that maps SINR to normalized RBIR and is different for different modulation types. The mapping function $I(•)$ can be approximated by a J-function and is shown in Table 1 for a few modulation types: quadrature phase shift keyed modulation (QPSK), 16 symbol quadrature amplitude modulation (16QAM), and 64 symbol QAM (64QAM).

| Table 1 | |
|---|---|
| Modulation type | $I(\cdot)$ |
| QPSK | $I(x) = J\left(2\sqrt{x}\right)$ |
| 16QAM | $I(x) = \frac{1}{2}J\left(a_1\sqrt{x}\right) + \frac{1}{4}J\left(a_2\sqrt{x}\right) + \frac{1}{4}J\left(a_3\sqrt{x}\right)$ |
| 64QAM | $I(x) = \frac{1}{3}J\left(b_1\sqrt{x}\right) + \frac{1}{3}J\left(b_2\sqrt{x}\right) + \frac{1}{3}J\left(b_3\sqrt{x}\right)$ |

The constants $a_1$, $a_2$, $a_3$, and $b_1$, $b_2$, $b_3$, may be obtained using numerical simulations and the J-function is defined by equation (eq.6):

$$J(x) = \begin{cases} -0.04210661x^3 + 0.209252x^2 - 0.0064008 1x, & 0 < x < 1.6363 \\ 1 - \exp\left(0.00181492x^3 - 0.142675x^2 - 0.0822054x + 0.0549608\right) & 1.6363 \le x < 10. \\ 1 & x \ge 10 \end{cases} \quad (\text{eq.6})$$

Each RI assumption may have several different PMI choices which are mapped to different pre-coding matrix $W_{k,n}$. Different CQI values may also have different modulation schemes. Therefore the RBIR needs to be calculated separately for each PMI, for each modulation scheme, and for every layer under every RI assumption.

It would be most effective to select the best PMI, RI, and CQI simultaneously to achieve optimal performance. However this is very complex and cannot always be implemented in the UE. Thus, in certain embodiments, the best PMI is selected first then the best CQI and RI are selected.

Once the RBIR is obtained in accordance with equation (eq.5) a final output RBIR needs to be generated. When the receiver, typically located in the UE, is in open loop spatial multiplexing (OLSM) mode there is no need to report the PMI so the RBIR for different PMI are averaged to create the final output RBIR for each layer and each modulation scheme. When in closed loop spatial multiplexing (CLSM) mode the PMI which provides the maximum sum of the RBIR over all layers is selected as the best PMI for each RI assumption, and the corresponding RBIR of the best PMI for each layer and modulation scheme are chosen as the output RBIR.

LTE allows transmission of one or two codewords at a time and each codeword may be mapped into several layers during transmission. Each of the two codewords are referred to herein as codeword 0 and codeword 1. Once a PMI is selected the RBIR on different layers corresponding to the same codeword are summed to create a single RBIR output value. Then the RBIR for each codeword and each modulation scheme are used to update the RBIR buffer of each RI assumption.

There is a feedback delay associated with reporting a CQI and using it in transmission, thus instead of using the currently calculated RBIR, a predicted RBIR is needed to reduce the impact of the CQI feedback delay. A prediction is generated for each modulation scheme and each codeword under each RI assumption using a set of separate prediction processes. It should be noted that in certain embodiments each prediction process may not be completely separate and may use the same processing steps but operate on separate sets of data, where the data may include states and model parameters.

The RBIR values for each modulation scheme and each codeword for the past N subframes are stored in a RBIR buffer and are used to create a prediction based on LMMSE criteria. The RBIR buffer contains a set of RBIR values, $\left\{ RBIR_c^i \left( m - n \right) \right\}_{n = N-1, \dots, 0}$, where $i$ is an index representing the modulation scheme, such as the modulation schemes listed in Table 1, c is an index (c=0 or 1) representing the codeword, and $m$ is an index representing the current subframe, $RBIR_c^i \left( m - n \right)$ represents the RBIR of the subframe (m-n), which is n-th subframe before current subframe. For a certain CQI feedback delay $\delta_{delay}$, the goal of RBIR prediction is to generate a RBIR value that approximates the RBIR that will be present in subframe m+$\delta_{delay}$, where m is the index of the current subframe. This prediction can be estimated using equation (eq.7):

$$RBIR_c^i \left( m + \delta_{delay} \right) = \sum_{p=0}^{P-1} w(p) \left( RBIR_c^i \left( m - p \right) \right) + \left( 1 - \sum_{p=0}^{P-1} w(p) \right) \frac{1}{N} \sum_{n=0}^{N-1} RBIR_c^i \left( m - n \right) . \quad (\text{eq.}7)$$

In equation (eq.7) w(p) represents a vector of Wiener coefficients that may be calculated using equation (eq.8):

$$\begin{pmatrix} w(0) \\ w(1) \\ \dots \\ w(P-1) \end{pmatrix} = \begin{pmatrix} r(m,0) & r(m,1) & \dots & r(m,p-1) \\ r(m,1) & r(m,0) & \dots & r(m,p-2) \\ \dots & \dots & \dots & \dots \\ r(m,p-1) & r(m,p-2) & \dots & r(m,0) \end{pmatrix}^{-1} \begin{pmatrix} r(m,\delta_{delay}) \\ r(m,\delta_{delay}+1) \\ \dots \\ r(m,\delta_{delay}+P-1) \end{pmatrix} . \quad (\text{eq.}8)$$

Each RBIR correlation r(m, Δn) with delay Δn is calculated using equation (eq.9):

$$r(m,\Delta n) = \sum_{k=m}^{m+N-1-\Delta n} \left( RBIR_c^i \left( k - N + 1 \right) - \frac{1}{N} \sum_{n=0}^{N-1} RBIR_c^i \left( m - n \right) \right) \left( RBIR_c^i \left( k + \Delta n - N + 1 \right) - \frac{1}{N} \sum_{n=0}^{N-1} RBIR_c^i \left( m - n \right) \right). \quad (\text{eq.}9)$$

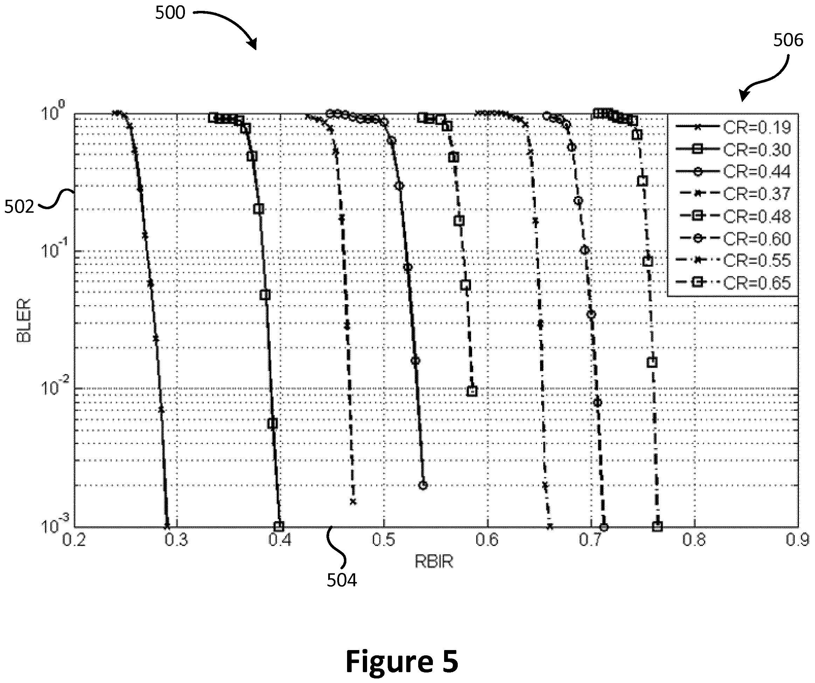

Figure 5 illustrates a graph 500 showing a typical mapping of RBIR to BLER generated through offline simulations, where the simulations are performed under additive Gaussian white noise (AGWN) channel conditions. Graph 500 shows BLER on the vertical axis 502 and RBIR on the horizontal axis 504. Each CQI has a defined coding rate, modulation scheme, and transmit block size (TBS) allowing the predicted throughput of each CQI to be calculated based on the predicted BLER. The graph 500 shows mappings of RBIR to BLER for several coding rates as listed in the legend 506. The BLER for each CQI is predicted for each CQI index and each codeword under each RI assumption. Then the RI and CQI index that maximizes the throughput is chosen as the output RI 422, and CQI 426 of the FLA algorithm 400 for each codeword.

SLA is based on longer term statistics of the channel condition than FLA. Thus when the channel undergoes a significant change, such as a change in rank, the SLA algorithms need to be reset in order to begin working on the new channel conditions. Two flags are used in the disclosed ESLA embodiments to indicate changes in channel conditions that need to be considered by the first 316 and second 320 stage ESLA processes. As illustrated in Figure 3 a CQI filtering flag (CFF) 330 is generated based on normalized RBIR correlation results 326, and a SLA reset flag (SRF) 328 is generated based on RI 342 changes.

The CFF 330 is based on a RBIR correlation 326 $r(m, \delta_{delay})$ output from the FLA process 312 corresponding to codeword 0. Codeword 0, i.e. the first codeword, is used because it is always transmitted for all rank assumptions while codeword 1, the second codeword, is only transmitted when the channel conditions are good enough to support it. The CFF 330 is generated by comparing the normalized RBIR correlation 326 corresponding to the RI 342 and CQI 314 selected by the FLA module 312, with a pre-defined threshold value. When the RBIR correlation 326 is larger than the pre-defined threshold the RBIR prediction is assumed to be efficient and the CFF 330 is set to false to deactivate CQI filtering within the second stage ESLA process 320. Conversely, when the RBIR correlation 326 is low it indicates the RBIR is changing quite fast under current channel conditions so the CFF 330 is set to true to activate the CQI filtering within the second stage ESLA process 320. It should be noted that BLER target tracking 332 always runs regardless of the CFF 330 state. Alternatively the inverse logic may also be advantageously employed where a CFF of true deactivates CQI filtering in the second stage ESLA process and a CFF of false does not.

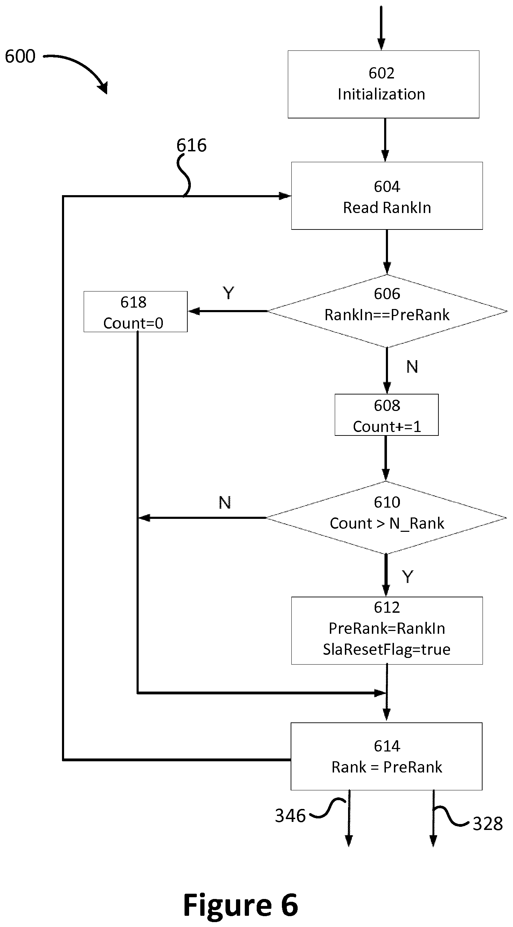

Figure 6 illustrates a flow chart of an exemplary embodiment of a RI post process 600 as may be used in the RI post process 340 described above with reference to Figure 3 and Figure 4. When there is rank change, the RI post process 600 signals a significant change in channel condition by setting an SRF which causes all internal buffers and parameters in the first 316 and second 320 stage ESLA processes to be re-initialized and all parameters get reset. In order to increase the robustness of the ESLA process, the RI post process 600 introduces hysteresis to reduce the frequency of RI changes. Thus the exemplary RI post process 600 receives the predicted RI estimate from an FLA process 312 and generates a stabilized RI 346 and a SRF 328. The exemplary RI post process 600 will now be described with reference to Figure 3 and Figure 4. On system startup the RI post process 600 initializes 602 a count and a predicted rank (PreRank) to zero then enters a continuous loop 616 that is exceed at each iteration, where an iteration may be executed periodically such as for every received subframe, or a periodically such as when CSI reporting is requested by a transmitter. Each iteration of loop 616 begins 604 by resetting the SRF and reading the current rank prediction (RankIn) 342 generated by the FLA process 312. RankIn is then compared 606 to the current PreRank value. If the PreRank value matches the RankIn value, the count is set to zero 618, and the current PreRank value 346 and current SRF 328 are output 614. The process 600 then returns to step 604 to begin its next iteration. If at step 606 the RankIn is not equal to the PreRank then the count is incremented 608 and compared 610 to a hysteresis constant N_Rank. If the count is not greater than N_Rank then the RI post process 600 proceeds directly to step 614 where the current PreRank value 346 and current SRF 328 are output, otherwise if the count is greater than N RANK the PreRank value is set to the RankIn resulting in a rank change, and the SRF is set before proceeding to step 614. Thus the exemplary RI post process 600 reduces the frequency of rank changes by introducing hysteresis and sets the SRF each time the rank changes.

The goal of a first stage ESLA process 312 is to adjust the CQI index value 310 output by the FLA process 308 in order to meet a certain BLER target. The first stage ESLA process is the same and independent for all codewords so only the process for one codeword is described herein. In an exemplary embodiment a first stage ESLA process adjusts its CQI output value, $CQI\_SLA1$ 318, based on the output of the FLA process, $CQI\_FLA$ 314, and received ACK/NAK information in accordance with equation (eq.10):

$$CQI\_SLA1 = floor\left(CQI\_FLA + \Delta CQI + 0.5\right). \qquad (\text{eq.}10)$$

The $floor\ (\cdot)$ operator rounds down, or truncates, to the nearest integer value that is no greater than the given value, thus by adding 0.5 prior to the $floor\ (\cdot)$ operation, the resulting sum, $CQI\_FLA + \Delta CQI,$ is effectively rounded to the nearest integer value by equation (eq.10). The CSI adjustment value $\Delta CQI$ is a parameter initialized to zero and updated at each iteration, or subframe, based on the decoding result i.e. ACK or NAK for the received codeword as shown in equation (eq.11):

$$\Delta CQI = \begin{cases} \Delta CQI + \dfrac{BLER\text{Target}}{1\text{-}BLER\text{Target}} CQIStepSize, & when\ ACK\ is\ received \\ \Delta CQI - CQIStepSize, & when\ NACK\ is\ received \end{cases} , \qquad (eq.11)$$

where *CQIStepSize* is a pre-defined parameter used to determine the speed with which the CSI adjustment value $\Delta CQI$ changes. Whenever a SRF with a value of active, which in certain embodiments may also be a value of true, is received from the RI post process 340 the $\Delta CQI$ value is reinitialized to zero.

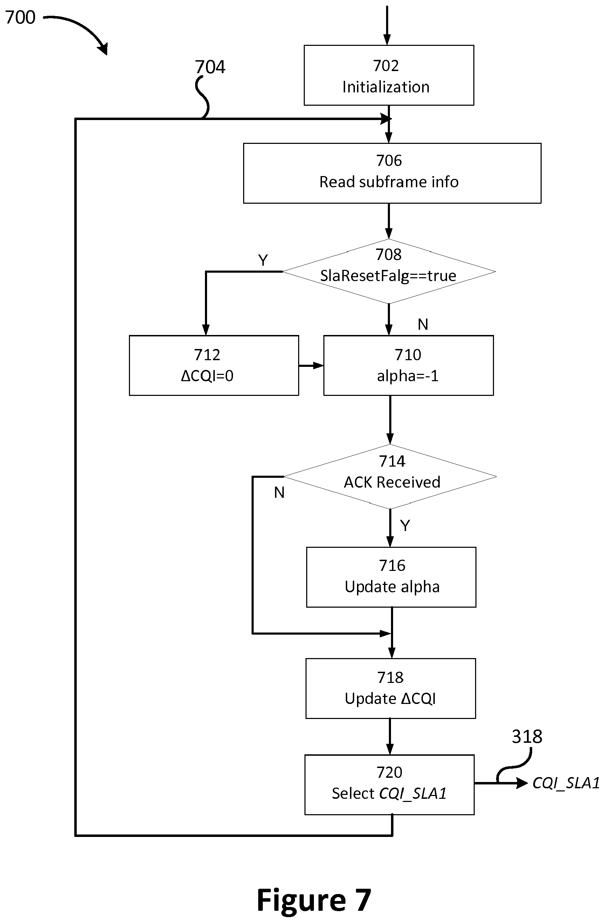

Figure 7 illustrates a flowchart of an embodiment of an exemplary first stage ESLA algorithm 700 appropriate for use in the first stage ESLA process 316 illustrated. At system startup the exemplary first stage ESLA process 700 initializes a CSI adjustment value $\Delta CQI$ to zero 702 then enters a continuous loop 704 that is executed at each iteration or subframe. The loop 704 begins by reading the ACK/NAK result for the current codeword, the current SRF value provided by a RI post process 340, the current CQI output 314 from a FLA process 312, *CQI_FLA,* and the BLER Target 338, *BLERTarget,* for the next subframe which in certain embodiments is provided by a BLER tracking process 332. If the SRF is active 708 indicating the RI has changed, the CQI adjustment factor $\Delta CQI$ is reset to zero 712, otherwise the $\Delta CQI$ is not reinitialized and an intermediate value, $\alpha$, is set to negative one (-1) 710. The process 700 then checks whether an ACK was received 714 and if an ACK was received (indicating that the CRC result was a pass and the received data was good, conversely an NAK indicates the CRC result was a fail) the intermediate value $\alpha$ is updated 716 to $\alpha = \dfrac{BLERTarget}{(1-BlerTarget)},$ otherwise when a NAK is received, $\alpha$ is not updated. Next the CQI adjusting factor $\Delta CQI$ is updated 718 using the previously set $\alpha$ value and a predefined step size *CQIStepSize,* which determines the adjusting speed: $\Delta CQI = \Delta CQI + \alpha(CQIStepSize).$ Finally the output CQI value, *CQI_SLA*1, is found by adding $\Delta CQI$ to the rounded to the nearest integer value 720 using equation (eq.10) above and the resulting *CQI_SLA*1 is output 318. The process then repeats at the next iteration or subframe as indicated by loop 704.

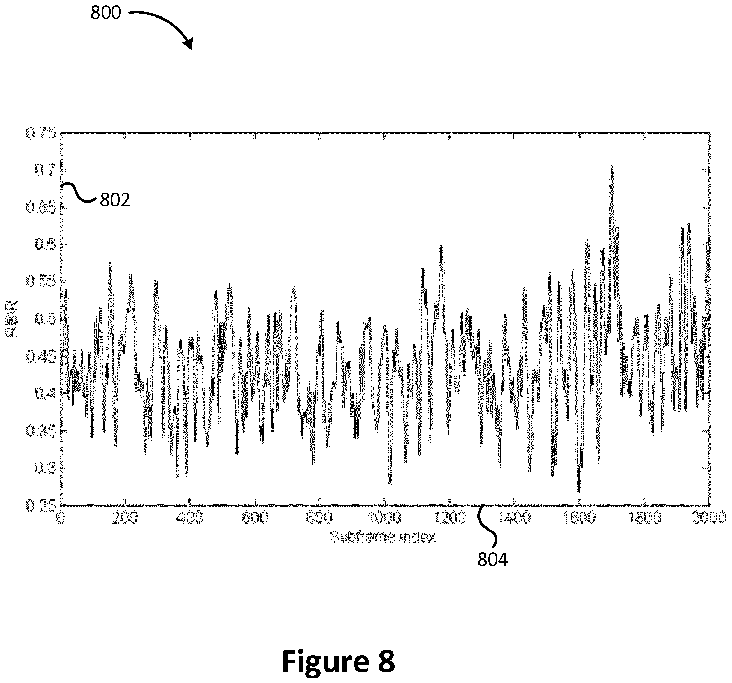

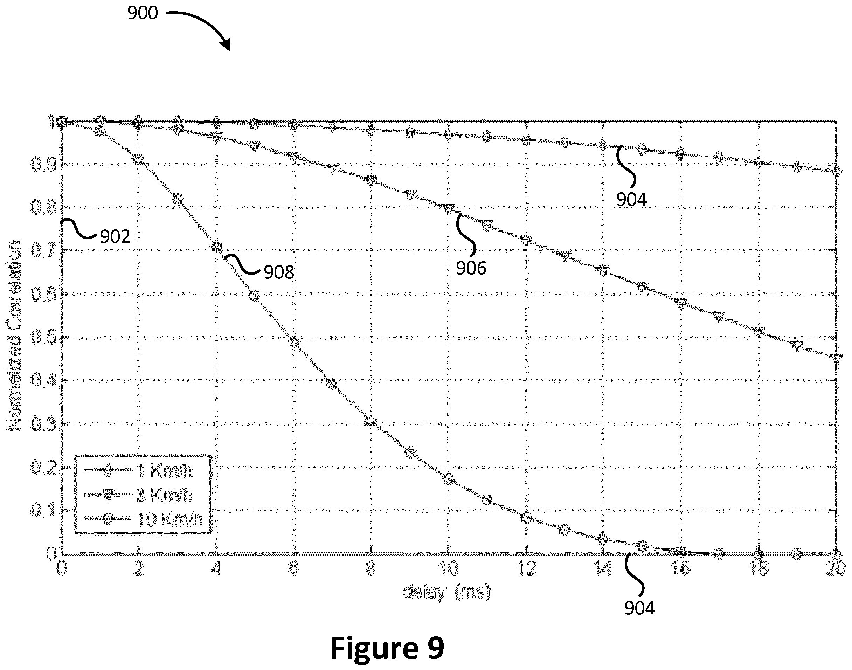

The second stage ESLA process 316 handles situations where the FLA algorithms described above do not work efficiently. These situations can happen for example when UE speed increases or equivalently the CQI feedback delay increases. When the FLA algorithm is not operating efficiently, the RBIR correlation will decrease and the RBIR prediction will also be inefficient. In these situations it is typical to discontinue link adaptation and return a constant CQI value to the transmitter. To better understand why FLA algorithms are not as effective as desired under conditions where the UE speed is increasing it is instructive to look at some simulated RBIR results. Figure 8 illustrates a graph of measured RBIR and Figure 9 illustrates a graph of normalized RBIR correlation of a channel under the 3GPP defined standard channel condition known as the extended pedestrian A model (EPA). The graphs in Figures 8 and 9 illustrate a 10 megahertz (MHz) 4x4 multi-input multi-output (MIMO) channel with a SNR of 19 dB using 64QAM. Figure 8 illustrates a graph 800 showing RBIR on the vertical axis 802 against subframe index on the horizontal axis 804. Figure 9 illustrates a graphs 900 of normalized RBIR correlation on the vertical axis 902 against CQI feedback delay in milliseconds on the horizontal axis 904 for three different UE speeds: 1 Km/h 906; 3Km/h 908; and 10 Km/h 910. The normalized RBIR correlation 902 is calculated using equation (eq.12):

$$\omega\left(\Delta n\right) = \frac{r\left(m, \Delta n\right)}{r\left(m, 0\right)},\ 0 \le \Delta n \le 20, \qquad (eq.12)$$

where $r(m, \Delta n)$ is defined by equation (eq.9) above. In the test of graph 800 and graph 900 the subframe index is m=N=5000 yielding a normalized RBIR correlation calculated through the first 5000 subframes. Graph 900 shows that with a delay $\delta_{delay} \ge 8ms$ and a UE speed of 10 kilometers (Km) per hour (h) the RBIR correlation 908 between the current subframe and the subframe after delay time, $\delta_{delay}$, is less than 0.3 indicating that the RBIR prediction will not provide an efficient FLA.

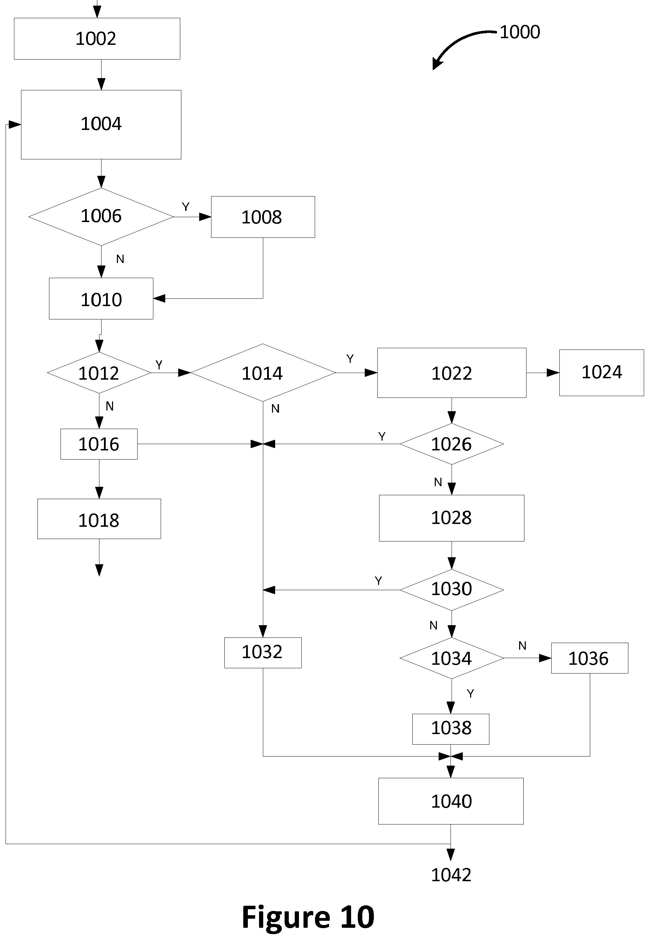

Throughput performance of the link can be improved by including a second stage ESLA process 320 to filter the CQI output *CQI_SLA*1 318, of the first stage ESLA process 316, based on a combination of long term and short term statistics of the ACK/NAK or CRC results information resulting from decoding of the codewords. Figure 10 illustrates a flow chart of an exemplary second stage ESLA algorithm 1000 appropriate for use in the second stage ESLA process 320 described above. The second stage ESLA algorithm 1000 maintains two history buffers used for statistical analysis of past performance: a CQI history buffer, *CQIHist[N_Filt],* is a one dimensional buffer storing CQI index values output from a first stage ESLA process during a predetermined number *N_Filt* of past subframes; and CRC results history buffer, *CRCHist[C_Filt][N_Filt],* is a two dimensional buffer storing decoding results, i.e. ACK/NAK information or CRC results, for each CQI index over the predetermined number of subframes *N_Filt.* The predetermined number of subframes, *N_Filt,* is the number of past subframes or iterations for which data is stored in the buffer, for example in certain embodiments *N_Filt* may be about 5000 and is used for computation of long term statistics. The CQI 314 output from the first stage ESLA process 312 is stored in the CQI history buffer, *CQIHist[N_Filt]* for each iteration or subframe. However, in certain instances the transmitter, such as an eNodeB, may use a RI during transmission that is different than the RI recommended by the receiver. When this occurs a RI flag value, which in certain embodiments is a negative one (-1), is stored in the CQI history buffer, *CQIHist[N_Filt],* rather than the CQI output *CQI_SLA*1 314 to indicate that the feedback RI was modified by the transmitter. If the RI utilized by the transmitter is different from the output RI estimate 346, the received ACK/NACK information does not correspond to current RI and CQI selections; therefore the information is not useful for current ESLA processing. The second dimension of the CRC history buffer, *C_Filt,* is an integer equal to the number of available MCS plus one. For example in an LTE system there are typically 15 available MCS or CQI values, yielding a *C_Filt* of 15 where each of the 15 values is associated with one of the 15 available CQI indices. The CRC history buffer *CRCHist[C_Filt][N_Filt]* records the ACK and NAK information, i.e. CRC results, for the previous *N_Filt* subframes corresponding to all available CQI indices. The recorded value is set to zero (0) for an ACK, one (1) for a NACK, and negative one (-1) for all values corresponding to a CQI that was not used in the transmission by the transmitter. The exemplary second stage ESLA algorithm 1000 utilizes a predetermined number of subframes, *N_Filt,* for long term statistics and a second predetermined number of subframes, *M_Filt,* for short term statistics where *N_Filt* is greater than *M_Filt.* Thus the buffers maintain *N_Filt* entries for long term statistic computations and only the most recent *M_Filt* buffer entries are used for short term statistics. The algorithm 1000 also uses two predetermined filtering coefficients, alpha1 and alpha2, when filtering the CQI values.

The exemplary second stage ESLA algorithm 1000 begins at system startup by initializing the history buffers and setting an internal counter to zero 1002. At each iteration or subframe a number of inputs are read 1004 including:

- the CQI output from the first stage ESLA process 318, denoted by *CQI_SLA*1;
- the SRF 328 output from a RI post process 340;
- the CFF 330 output from the RBIR process 324;
- ACK/NACK (CRC results) from the decoder; and
- the CQI and RI utilized by the transmitter which may be obtained from control channel information.

Once the above described inputs are available 1004, the SRF is checked 1006 to determine if the predicted RI has changed. When the SRF is set, the counter is set to zero and the buffers are initialized or cleared, 1008. When a buffer is initialized or cleared all entries in the buffer are deleted resulting a buffer of zero length or a buffer with no entries. Next the CRC history buffer, *CRCHist,* and CQI history buffer, *CQIHist,* are updated 1010 by adding the new values to the front of the buffers and if the buffers are full, i.e each buffer contains the predetermined maximum number of entries *N_Filt,* the oldest entry is remove from the back of the buffer. As described above, each entry in the CQI history buffer, *CQIHist,* is the CQI value obtained from the first stage ESLA process or negative one (-1) if the transmitter did not use the feedback RI value, and the entry in the CRC History buffer, *CRCHist,* is a matrix of ACK/NACK or CRC results for each available CQI. As used herein the back of the buffer refers to the oldest entry and the front of the buffer refers to the newest entry and entries are ordered from oldest to newest from back to front. As described above, in certain instances the transmitter may change the RI selection reported by the UE, thus when the RI used by the transmitter for the current subframe is different from the RI estimate 346, a value of negative one (-1) is recorded for all CQI indices in CRC history buffer.

Once the history buffers have been updated with values for the current iteration, the count of entries in the buffers is checked 1012 to see if the buffers are full. If the buffers are not full then there is too little data in the history buffers for affective second stage ESLA CQI filtering so the count of entries in the buffer is incremented 1016 and the second stage filtering parameter, a, is set to one (1) 1032. The BLER Target output 338 of the BLER tracking process 332 is also set to its base value 1018. When the buffers are full, then the CFF 330 is checked 1014 and if the CFF is set, then the second stage ESLA CQI filtering is bypassed by setting the filtering parameter, a, to one (1) 1018, and when the CFF is not set then second stage ESLA CQI filtering begins 1022. Second stage CQI filtering begins 1022 by determining a long term statistic from the CQI history buffer, *CQIHist[N_Filt],* where all *N_Filt* entries in the buffer are examined and the CQI valued used most often or most commonly during the last *N_Filt* iterations or subframes is determined and the resulting CQI value is provided to the BLER tracking process 1024. Next if the most commonly used CQI value is negative one (-1) 1026, then the CQI filtering is disabled by setting the filtering parameter, a, to one (1) 1032, otherwise a short term CQI statistic is determined 1028. The short term statistic is determined 1028 in the same fashion as the long term statistic except instead of using the entire buffer as is done for the long term statistic, only the most recent *M_Filt* entries are used. The result of the short term statistic 1028 is checked 1030 and if the short term statistic is negative one (-1) indicating that the RI and CQI values recommended by the receiver were overridden in most of the last *M_Filt* iterations, the second stage CQI filtering is again disabled by setting the CQI filter parameter, a, to one (1) 1032. The long term CQI statistic is compared to the short term CQI statistic 1034, and when the long term CQI statistic and short term CQI statistic are the same then the CQI filter parameter, a, is set to a first predetermined value, alphal, 1038, otherwise when the short term CQI statistic and long term CQI statistic are different the CQI filter parameter is set to a second predetermined value, alpha2, 1036. Once the CQI filtering parameter, a, has been appropriately set: to 1 when bypassing filtering; to alphal, when the long and short term CQI statistics are the same; and to alpha2 when the long term and short term CQI statistics are different, a second stage ESLA CQI output value, *CQI_SLA2,* is determine 1040 in accordance with equation (eq.13):

$$CQI\_SLA2 = floor\left(a * CQI\_FLA1 + \left(1 - a\right) j + 0.5\right), \qquad \text{(eq.10)}$$

where j is the short term CQI statistic determined in step 1028 above. The determined second stage ESLA CQI value, *CQI_SLA2,* is then output 1042 and the second stage ESLA process 1000 repeats from step 1004 at each subsequent iteration or subframe.

To aid understanding of the BLER Target Tracking process 332 it is instructive to look at an example illustrating conditions where using a fixed BLER target in the first stage ESLA process 312 adversely affects throughput. For this illustration simulations were done for a channel under extended typical urban (ETU) conditions with a UE speed of 30 Km/h using an LTE system. The simulation parameters are provided in Table 4 below. Table 2 shows the BLER performance of codeword 0 with HARQ enabled for CQI indices 9 through 12 for various SNR levels (shown in dB in the left hand column of Table 2), and Table 3 shows the corresponding peak throughput in megabits per second (Mbps) for CQI indices 9 through 12.

| Table 2. | | | | | |
|---|---|---|---|---|---|
| SNR | CQI 08 | CQI 09 | CQI 10 | CQI 11 | CQI 12 |
| 0 | 0.76 | 0.975 | 1 | 1 | 1 |
| 8 | 0.454 | 0.5 | 0.66 | 0.72 | 0.76 |
| 12 | 0 | 0.258 | 0.5 | 0.60 | 0.67 |
| 19 | 0 | 0 | 0.034 | 0.49 | 0.5 |
| 22 | 0 | 0 | 0 | 0.003 | 0.43 |

| Table 3. | | | | | |
|---|---|---|---|---|---|
| SNR | CQI 08 | CQI 09 | CQI 10 | CQI 11 | CQI 12 |
| 0 | 22.92 | 28.336 | 30.576 | 39.232 | 46.888 |

| Table 4 | |
|---|---|
| Parameters | Value |
| LTE Bandwidth | 10 MHz |
| Number of Pilot Resource Blocks | 50 |
| MIMO Scheme | 4x4 |
| Transmission Mode | Open Loop Spatial Multiplexing (TM3) |
| Channel Estimation | Ideal |
| Detection Type | LMMSE |
| Channel Model | EPA, EVA,ETU |
| UE speed | 1~30 km/h |
| Channel correlation | Low |

Table 2 shows that at SNR=19dB, the best throughput performance is provided by CQI=10. The throughput corresponding to CQI=10 can be obtained using the BLER value from Table 2 (0.034) and the peak throughput from Table 3 as 30.576×(1-0.034) = 29.53 Mbps. Assuming a typical predefined BLER target of 10%, a first stage ESLA algorithm will not be able to output a constant CQI index of 10. Theoretically the first stage ESLA algorithm, such as the exemplary first stage ESLA algorithm 700 described above, will output a combination of CQI indices 9 through 12 (or possibly higher CQI) to satisfy the BLER constraint. To show why having a combination of CQI indices is sub-optimal consider a condition where the first stage ESLA is issuing a combination of CQI including only indices 10 and 11. Let the probability of choosing CQI=10 be p. To meet a 10% BLER target with the BLER performance of Table 2, there needs to be $p \times 0.034 + (1-p) \times 0.49 = 0.1$, where 0.1 represents the 10% BLER target. Thus the probability of choosing CQI=10, p, is 0.85 which means that the CQI indices output by the first stage ESLA under these conditions will contain 85% CQI index 10 and 15% CQI index 11. With these percentages and a BLER target of 10% the throughput can be computed using the values from Table 2 and Table 3 as shown in equation (eq.14):

$$p \times (1 - 0.034) \times 30.576 + (1 - p) \times (1 - 0.49) \times 39.232 \approx 28.1 \text{ Mbps.} \qquad (\text{eq.14})$$

With a constant CQI=10 the throughput was shown above to be 29.53 Mbps however when the first stage ESLA adjusts the CQI to satisfy the BLER target the throughput drops to about 28.1 Mbps. Thus a BLER target tracking process 332 is used to adjust the BLER target according to the variable channel conditions thereby avoiding the reduced throughput problem just illustrated.

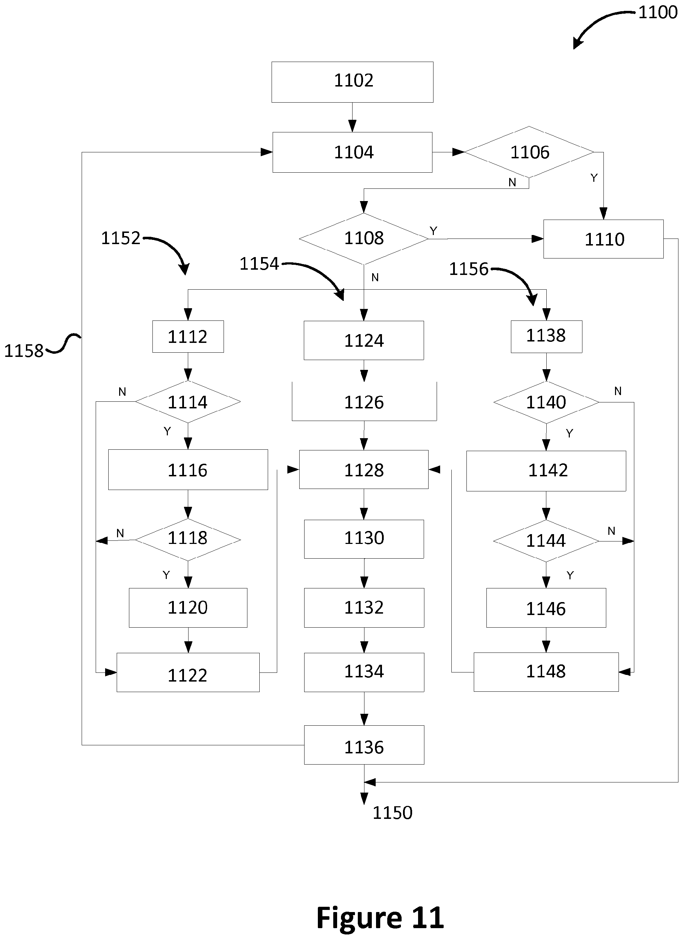

In Figure 11 there can be seen a flow chart illustrating an exemplary embodiment of a BLER target tracking process 1100 appropriate for use in the ESLA based CQI reporting technique 300 described above. The exemplary BLER target tracking process 1100 receives a long term CQI statistic, $CQI_M$, such as the long term CQI statistic generated at step 1022 of the exemplary second stage ESLA process 1000, and tracks the received $CQI_M$ along with the next higher throughput CQI, $CQI_H$, and the next lower throughput CQI, $CQI_L$, to determine an appropriate BLER constraint for a first stage ESLA process such as the first stage ESLA process 312. The BLER target tracking algorithm 1100 maintains a BLER target parameter, *BLERTarget,* that is initialized 1102 to zero on system startup. At each iteration or subframe, a most often used CQI index $CQI_M$ is determined from a CQI history buffer *CQIHist,* 1104 or may be read from a second stage ESLA process such as the exemplary second stage ESLA process 1000 illustrated in Figure 10. The $CQI_M$ is then compared to negative 1 (-1) 1106 and if $CQI_M$ is equal to negative one (-1) indicating that the RI used by the transmitter is different from the RI recommended by the receiver, the BLER target parameter, *BLERTarget,* is reset to a predetermined BLER value B0 1110 and is output 1150 for use by a first stage ESLA process. When $CQI_M$ is not negative one (-1) an SRF 328 is checked 1008 to determine if the recommended RI has changed. If the SRF 328 is set then the *BLERTarget* value is reset to B0, 1110, and the *BLERTarget* value and is output 1150 for use by a first stage ESLA process. When the SRF 328 is not set then the throughput for each of the considered CQI indices $CQI_L$, $CQI_M$, $CQI_H$, are computed. Processing path 1154 computes the throughput for the long term CQI statistic, $CQI_M$, by first calculating 1124 the BLER, $BLER_M$, with ACK/NACK information in the CRC history buffer, *CRCHist,* and then calculating 1126 the throughput for $CQI_M$ as described above from the peak throughput for the associated MCS and the $BLER_M$ value. The throughput for the next lower CQI, $CQI_L$, is calculated in path 1152 and begins by initializing 1112 a BLER value, $BLER_L$, to one (1). $CQI_L$ is then checked to see if it is the lowest throughput CQI index available. For example in a certain LTE systems the available CQI indices are integer values from one (1) to fifteen (15) corresponding to 15 available MCS used during data transmission where the lowest CQI index (1) corresponds to the lowest throughput MCS and the highest CQI index (15) corresponds to the highest throughput MCS. Thus for a CSI of $CQI_M = 7$, the next lower throughput CSI is $CQI_L = 6$, and the next higher throughput CSI is $CQI_H = 8$. For brevity, the next lower throughput CSI and next higher throughput CSI may be referred to herein as the next lower CSI and next higher CSI respectively. When $CQI_L$ is the lowest throughput CQI then BLER calculation is skipped and the BLER tracking process 1100 skips directly to the throughput computation step 1122. When $CQI_L$ is not the lowest throughput CQI, the number of available data points in the CRC history buffer *CRCHist* is determined 1116. If the number of data points in the history buffer *CRCHist* is less than a pre-determined BLER statistic size then the BLER calculation is skipped and the BLER tracking process 1100 skips directly to the throughput computation step 1122. The CQI statistic computation 1116 and BLER computation 1120 are skipped when the number of data points in the history buffer *CRCHist* is too small because with too few data points the computed BLER statistic may not be accurate. When there are enough data points in the history buffer *CRCHist,* i.e. the number of data points is above the pre-determined BLER statistic size, $BLER_L$ is computed using the history buffer *CRCHist.* Next the $BLER_L$ value is used to compute 1122 the throughput for $CQI_L$ using the peak throughput for the MCS associated with $CQI_L$. Similarly, a throughput for the next higher CQI, $CQI_H$, is computed in path 1156 by setting a $BLER_H$ to one (1) 1138, comparing $CQI_H$ to the highest available CQI 1140, reading or calculating the number of data points for $CQI_H$ present in the history buffer 1142, checking to see if there are enough data points in the buffer 1144 for accurate BLER computation, computing a $BLER_H$ for $CQI_H$ 1146, and computing a throughput for $CQI_H$ 1148. Once a throughput has been calculated for each of the CQI values, $CQI_L$, $CQI_M$, $CQI_H$, The maximum throughput value is determined 1128 from the three throughput values computed at steps 1122, 1126, and 1148, and the BLER associated with the maximum throughput $BLER_{MAX}$ is selected 1130. The *BLERTarget* is then adjusted 1132 using equation (eq.15):

$$BLERTarget = beta * BLERTarget + (1\text{-}beta)* \ BLER_{MAX} \ , \qquad (eq. \ 14)$$

where *beta* is a free tracking parameter that may be tuned to achieve desired performance. The filtered *BLERTarget* is constrained at steps 1134 and 1136 to be within the pre-defined range [B1, B2] where B1 is a predefined lower BLER limit and B2 is a predefined upper BLER limit. At step 1134 the *BLERTarget* is compared to B1 and if the *BLERTarget* is less than B1 the *BLERTarget* is set to B1. Similarly at step 1136 the *BLERTarget* is compared to B2 and if the *BLERTarget* is greater than B2 the *BLERTarget* is set to B2. The filtered *BLERTarget* is held inside the predefined range [B1, B2] to improve robustness of the system. The final filtered *BLERTarget* value is then output 1150 for use by a first stage ESLA process 312 and the BLER target tracking algorithm repeats 1158 at the next iteration or subframe.

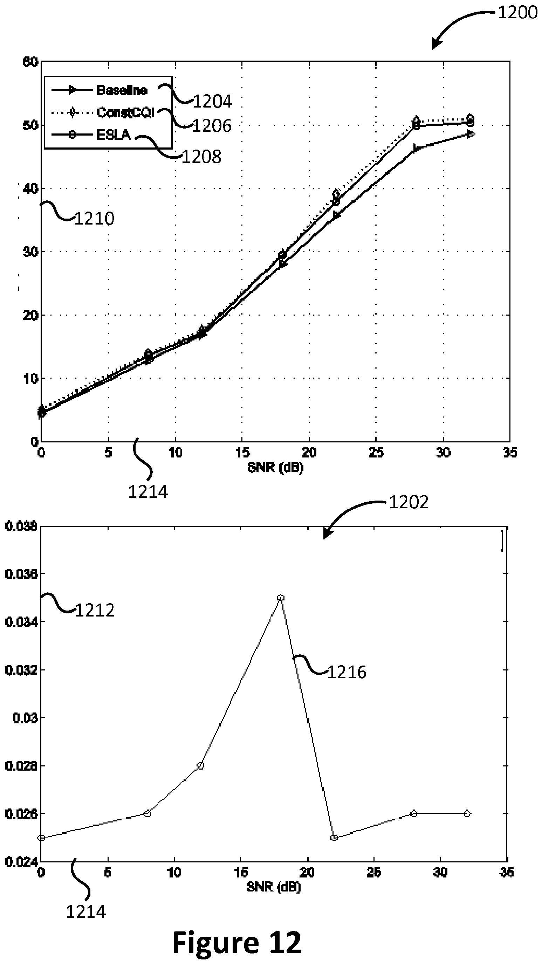

Figure 12 illustrates graphs showing simulated throughput 1200 and BLER 1202 performance of a wireless communication system incorporating an embodiment of an ESLA CQI selection process 300 as disclosed herein. Graph 1200 shows throughput of codeword 0 in Mbps on the vertical 1210 axis against SNR in dB on the horizontal axis 1214 and graph 1202 shows BLER on the vertical axis 1212 against SNR in dB on the horizontal axis 1214. The simulations were run for an extended typical urban model channel with a UE velocity of 30 Km/h (ETU30) using simulation parameters as shown in Table 4. Graph 1200 illustrates throughput results for a system incorporating an ESLA process 1208 as described above, and for comparison purposes, throughput of a baseline system 1204 and a system using a constant CQI 1206 are also shown. The baseline system 1204 includes only an FLA algorithm (without RBIR prediction) and the first stage ESLA with a constant BLER target of 0.1. As can be seen in Graph 1200, the baseline 1204 performance is about 2dB worse than the constant CQI system 1206 system in the middle and high SNR regions. This is partly due to the baseline system using a constant BLER target for SLA of 10%. However, with the ESLA algorithm 1208 described above, the performance is almost as good as constant CQI 1206. Graph 1202 shows that the BLER 1216 provided by the ESLA system remains well below the 10% (0.1) target used in the baseline system.

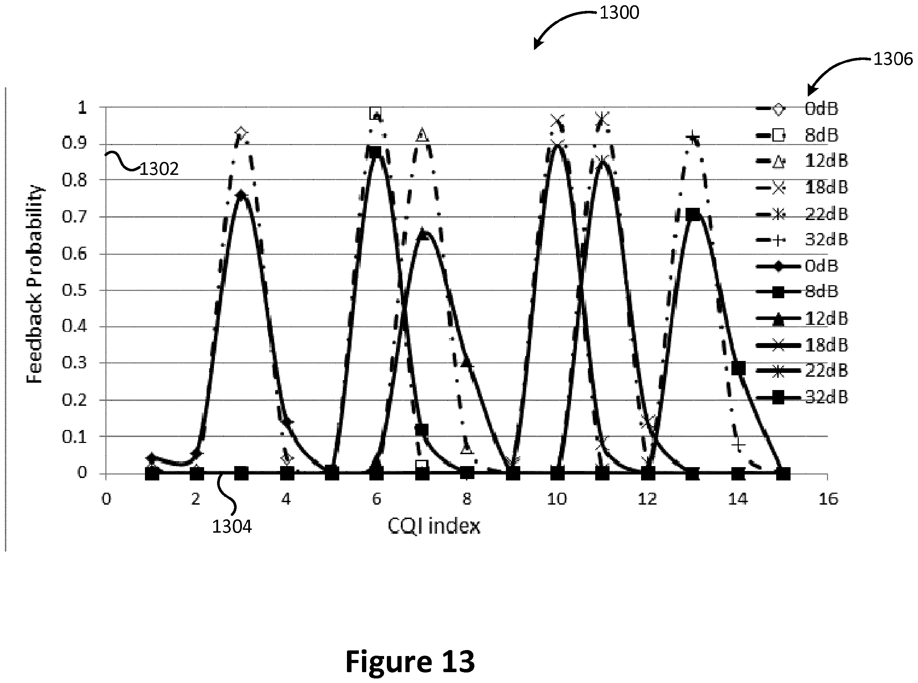

Figure 13 illustrates graphs 1300 showing the feedback probability on the vertical axis 1302 against CQI indices 1 to 15 shown on the horizontal axis 1304 for different SNR values ranging from -32dB to 32dB as listed in the legend 1306. Graph 1300 shows that utilizing an ESLA process as described above tends toward a more constant or focused CQI feedback. It has been shown in the art that a constant CQI can provide better performance in situations where FLA algorithms become inefficient.

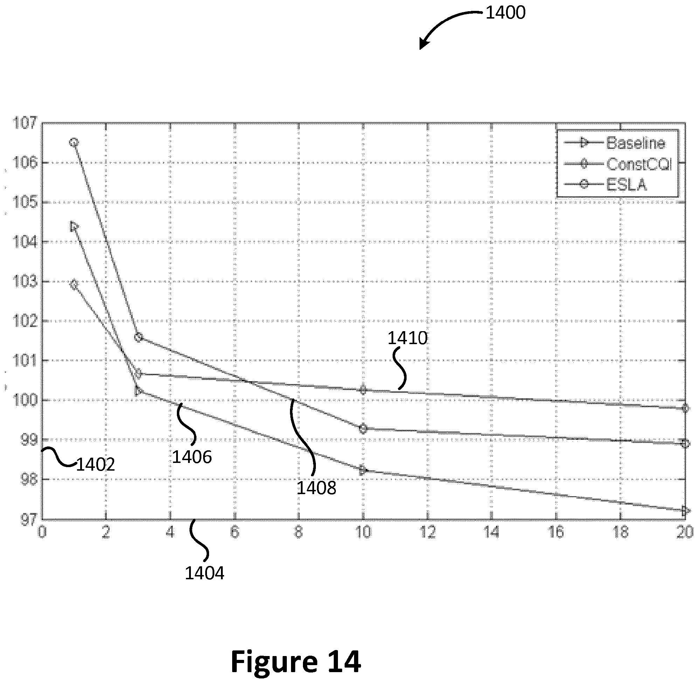

Figure 14 illustrates graphs 1400 showing throughput for both codeword 0 and codeword 1 in Mbps on the vertical axis 1402 against UE speed in Km/h on the horizontal axis 1404. These simulations were made for an extended pedestrian model A (EPA) channel with UE speed increasing from 1 Km/h to 20 Km/h and a constant SNR of 19dB. Graph 1400 shows 3 plots: plot 1406 shows throughput of the baseline system; plot 1410 shows throughput of a constant CQI system; and plot 1408 show throughput of a system employing a novel ESLA algorithm as disclosed herein. The system using the novel ESLA algorithm show significant throughput gains as compared to the other two systems under low UE speed. When UE speed is low, the RBIR prediction works quite well and is further enhanced by the BLER target tracking process. When UE speed increases the RBIR prediction becomes less efficient and constant CQI provides better throughput performance. However, due to the second stage of ESLA and BLER target tracking the throughput of the novel ESLA system is moved much closer to the constant CQI performance at higher UE speeds than the baseline system thereby provided significantly improved throughput at low UE speed while preserving most of the throughput of a constant CQI system at higher UE speeds.

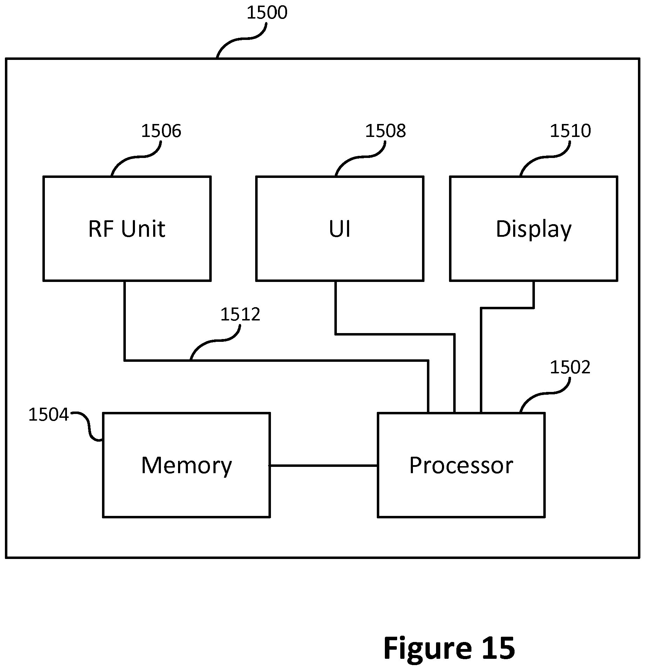

Figure 15 illustrates a block diagram of an apparatus for wireless communications 1500 that is appropriate for implementing the ESLA methods described herein. Apparatus 1500 includes a processing apparatus 1502 coupled to a computer memory 1504, a radio frequency (RF) unit 1506, a user interface (UI) unit 1508, and a display unit 1510. In certain embodiments interaction with a user is not required, thus in these embodiments the UI 1508 and display 1510 may be omitted from the apparatus 1500. The apparatus 1500 may be used in MS or for various types of wireless communications UE such as a cell phone, smart phone, tablet device, etc. The processing apparatus 1502 may be a single processing device or may comprise a plurality of processing devices including special purpose devices such as for example it may include a digital signal processing (DSP) device, microprocessor, or other specialized processing device as well as a more general purpose processor. The memory 1504 is coupled to the processing apparatus 1502 and may be a combination of various types of computer memory such as for example volatile memory, non-volatile memory, read only memory (ROM), or other types of computer memory and stores computer program instructions which may be organized as method groups including an operating system, applications, file system, as well as other computer program instructions for other desirable computer implemented methods such as the FLA methods disclosed herein. Also included in the memory 1504 are program data and data files which are stored and processed by the computer program instructions. The radio frequency unit 1506 is coupled to the processor and configured to receive and/or transmit radio frequency signals which based on digital data 1512 exchanged with the processing apparatus 1502. The RF unit 1506 includes analog to digital converters to digitize received RF signals at a desired sampling rate, such as for example a 30.72 megahertz (MHz) sample rate typically used for a 20 MHz LTE channel bandwidth, and send the digitized RF signals 1512 to the processing apparatus. Conversely the RF unit 1506 may include digital to analog converters to convert digital data 1512 received by the RF unit 1506 from the processing apparatus 1502 into analog signals in preparation for transmission. The UI 1508 may include one or more well-known user interface elements such as a touch screen, keypad, buttons, as well as other elements for exchanging data with a user. The display 1510 is configured to display a variety of information appropriate for a UE and may be implemented using any of well-known display types such as organic light emitting diodes (OLED), liquid crystal display (LCD), etc. The communications apparatus 1500 is appropriate for implementing the ESLA methods and algorithms described herein and with reference to Figure 15.

It is typical to implement FLA at the receiver side, while the SLA methods and algorithms described herein may be implemented in either the receiver or the transmitter. In the foregoing description the SLA algorithms have been described with respect to a receiver or UE. However, those skilled in the art will recognize that the same principles may be applied when SLA is implemented at a transmitter, such as an e-Node-B, since all the necessary information for ESLA can be reported to the transmitter through uplink transmissions.

Thus, while there have been shown, described and pointed out, fundamental novel features of the invention as applied to the exemplary embodiments thereof, it will be understood that various omissions and substitutions and changes in the form and details of devices and methods illustrated, and in their operation, may be made by those skilled in the art. Moreover, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice.

## Claims

1.  A transceiver (1500) operable for selecting channel state information, CSI, of a communication link wherein the transceiver (1500) comprises:

    a radio frequency, RF, unit (1506) configured to receive a communication signal from the communication link and produce a received data signal (302);
    a processing apparatus (1502) coupled to the RF unit (1506) and configured to receive the data signal; and
    a memory (1504) coupled to the processing apparatus (1502),
    wherein the processing apparatus (1502) is configured to:

       generate channel estimates (308) a cyclic redundancy check, CRC, result (334) and transmission parameter information (336) including a channel quality indicator, CQI, and a rank indication, RI, based on the data signal (302); and,
       generate with a fast link adaptation, FLA, algorithm (312, 400) a FLA CSI and an estimated received block information rate, RBIR, correlation value based on the channel estimates, wherein the FLA algorithm is configured to compute a RBIR for each modulation and coding scheme, MCS, in an employed set of MCS, and generate the FLA CSI and the estimated RBIR correlation value based the computed RBIR;

    **characterised in that** the processing apparatus is further configured to:

       generate with a first stage enhanced slow link adaptation, ESLA, algorithm (316, 700) a filtered CSI based on the FLA CSI, a first stage block error rate, BLER, target, and the CRC result, wherein the first stage ESLA algorithm is configured to compute (718) a CSI adjusting factor based on the CRC result and the first stage BLER target, and combine (720) the CSI adjusting factor with the FLA CSI to obtain the filtered CSI;
       update a CSI history buffer (1010) wherein the CSI history buffer comprises a first predetermined number of past filtered CSI values;
       update a CRC history buffer (1010) wherein the CRC history buffer comprises a first predetermined number of past CRC results;

generate with a second stage ESLA algorithm (320, 1000) an output CSI based on the transmission parameter information (336) and the filtered CSI, and the CSI history buffer, wherein the second stage ESLA algorithm is configured to select a CSI filter parameter (1032, 1036, 1038) from a set of predetermined filter constants based on the CSI history buffer, and to compute an output CSI (1040) based on the selected CSI filter parameter wherein the FLA algorithm is configured to generate a predicted RBIR based on the computed RBIR, and select the first CSI based on the predicted RBIR and the CRC information; and;

wherein the second stage ESLA algorithm is activated when the RBIR correlation is above a predetermined threshold value, and bypassed when the RBIR correlation is not greater than the predetermined threshold; and adjust the first stage BLER target with a BLER target tracking algorithm (332, 1100) based on the CSI history buffer and the CRC history buffer, wherein the BLER target tracking algorithm is configured to calculate a set of link throughput values corresponding to a set of CSI values (1152, 1154, 1156), select the maximum link throughput from the set of link throughput values (1128), calculate (1130) an expected BLER based on the selected maximum link throughput and the CRC history buffer, and adjust (1132) the first stage BLER target based on the expected BLER and a free tracking parameter to compute a working BLER, wherein the processing apparatus is configured to perform a rank indication, RI, post process (340, 600), and wherein the RI post process is configured to:

obtain a RI from the FLA CSI (604);
apply hysteresis (606, 608, 610, 618) to the obtained RI to create an output RI; and activate a Slow Link Adaptor, SLA, reset flag (612) when the output RI is different than a previous output RI, wherein activating the SLA reset flag:

resets the CSI adjusting factor to zero (712);
clears the CSI history buffer (1008);
clears the CRC history buffer (1008); and
sets the working BLER to a predetermined starting BLER (1110)

2. The transceiver according claim 1, wherein a long term CSI statistic (1022) and a short term CSI statistic (1028) are determined based on the CSI history buffer, and

the second stage ESLA algorithm is configured to select (1030-1040) the output CSI based on the short term CSI statistic and the long term CSI statistic,
wherein the long term CSI statistic corresponds to the most commonly used CSI during the first predetermined number of CSI values in the CSI history buffer (1022), the short term CSI statistic corresponds to the most commonly used CSI during a second predetermined number of CSI values in the CSI history buffer (1028), and wherein the first predetermined number is larger than the second predetermined number.

3. The transceiver according to claim 2, wherein the second stage ESLA algorithm is configured to:

set the CSI filter parameter to a first predetermined filter constant when the short term CSI statistic is equal to the long term CSI statistic (1036);
set the CSI filter parameter to a second predetermined filter constant when the short term CSI statistic is not equal to the long term CSI statistic (1038); and
adjust the output CSI based on the CSI filter parameter (1040).

4. The transceiver according to claim 2 or 3, wherein the BLER tracking algorithm:

determines a first throughput (1154) based on the long term CSI statistic and the CRC history buffer;
selects a next lower CSI;
determines a second throughput (1152) based on the next lower CSI and the CRC history buffer;
selects a next higher CSI;
determines a third throughput (1156) based on the next higher CSI and the CRC history buffer;
selects the maximum throughput (1128) from the first throughput, the second throughput, and the third throughput;
selects an expected BLER (1130) corresponding to the maximum throughput;
computes a working BLER target (1132) based on the expected BLER and a predetermined tracking constant; and
adjusts the first stage BLER target (1134, 1136) based on the working BLER,
wherein the next lower CSI is a CSI having lower throughput than the long term CSI statistic and the next higher CSI is a CSI having higher throughput than the long term CSI statistic.

5. The transceiver according to claim 4, wherein the first stage BLER target is obtained by constraining (1134, 1136) the working BLER between a predetermined minimum target BLER and a predetermined maximum target BLER.

6. The transceiver according to claim 1, wherein when the CRC result is a pass the CSI adjusting factor is increased and when the CRC result is a fail the CSI adjusting factor is decreased (718).

7. The transceiver according to any of the preceding claims 1 through 6, wherein when a selected rank indication, RI, has been used to transmit the communication signal the FLA CSI is entered into the CSI history buffer and when the selected RI is different than the RI used to transmit the communication signal a RI flag value is entered into the CSI history buffer, wherein the RI flag value indicates the value should be excluded from calculations involving the CSI history buffer.

8. The transceiver according to any of the preceding claims 1 through 7, wherein the CSI comprises one or more values selected from the group comprising a wide-band channel quality indicator, CQI, a sub-band CQI, a rank indicator, and a pre-coding matrix indicator.

9. A method for selecting channel state information, CSI, in a wireless transceiver, the method comprising:

generating channel estimates (308), a cyclic redundancy check, CRC, result (334) and transmission parameter information (336) including a channel quality indicator, CQI, and a rank indication, RI, based on the received radio frequency signal (302);
generating with a fast link adaptation, FLA, algorithm (312, 400) a FLA CSI and an estimated received block information rate, RBIR, correlation value based on the channel estimates, wherein the FLA algorithm is configured to: compute a RBIR for each MCS in an employed set of MCS, and generate the FLA CSI and the estimated RBIR correlation value based on the calculated RBIR;

**characterised by**:

generating with a first stage enhanced slow link adaptation, ESLA, algorithm (316, 700), a filtered CSI based on the FLA CSI, a first stage block error rate, BLER, target, and the CRC result, wherein the first stage ESLA algorithm is configured to compute (718) a CSI adjusting factor based on the CRC result and the first stage BLER target, and combine (720) the FLA CSI and the CSI adjusting factor to select the filtered CSI;
updating a CSI history buffer (1010) wherein the CSI history buffer comprises a first predetermined number of past filtered CSI values;
updating a CRC history buffer (1010) wherein the CRC history buffer comprises the first predetermined number of past CRC results;

generating with a second stage ESLA algorithm (320, 1000) an output CSI based on the transmission parameter information (33) and the filtered CSI, the CRC results, and the CSI history buffer, wherein the second stage ESLA algorithm is configured to select a CSI filter parameter (1032, 1036, 1038) from a set of predetermined filter constants based on the CSI history buffer, and to compute an output CSI (1040) based on the selected CSI filter parameter wherein the FLA algorithm is configured to generate a predicted RBIR based on the computed RBIR, and select the first CSI based on the predicted RBIR and the CRC information; and;
wherein the second stage ESLA algorithm is activated when the RBIR correlation is above a predetermined threshold value, and bypassed when the RBIR correlation is not greater than the predetermined threshold; and
adjusting the first stage BLER target with a BLER target tracking algorithm (332, 1100) based on the CSI history buffer and the CRC history buffer, wherein the BLER target tracking stage is configured to calculate a set of link throughput values corresponding to a set of CSI values (1152, 1154, 1156), select the maximum link throughput from the set of calculated link throughput values (1128), calculate (1130) an expected BLER based on the calculated maximum link throughput and the CRC history buffer, and adjust (1132) the first stage BLER target based on the expected BLER and a free tracking parameter to compute a working BLER, wherein the method comprises a rank indication, RI, Post Process (340,600), and wherein the RI post process is configured to:

obtain a RI from the FLA CSI (604);
apply hysteresis (606, 608, 610, 618) to the obtained RI to create an output RI; and
activate (612)a Slow Link Adaptor, SLA, reset flag when the output RI is different than a previous output RI, and

wherein activating the SLA reset flag:

resets the CSI adjusting factor to zero (712);
clears the CSI history buffer (1008);
clears the CRC history buffer (1008); and

sets the working BLER to a predetermined starting BLER (1110).

**Patentansprüche**

1. Sendeempfänger (1500), der zum Auswählen einer Kanalzustandsinformation bzw. CSI einer Kommunikationsverbindung funktionsfähig ist, wobei der Sendeempfänger (1500) Folgendes umfasst:

eine Hochfrequenzeinheit bzw. HF-Einheit (1506), die ausgelegt ist zum Empfangen eines Kommunikationssignals von der Kommunikationsverbindung und zum Erzeugen eines empfangenen Datensignals (302);
eine Verarbeitungsvorrichtung (1502), die mit der HF-Einheit (1506) gekoppelt ist und ausgelegt ist zum Empfangen des Datensignals; und
einen Speicher (1504), der mit der Verarbeitungsvorrichtung (1502) gekoppelt ist,
wobei die Verarbeitungsvorrichtung (1502) zu Folgendem konfiguriert ist:

Erzeugen von Kanalschätzungen (308), eines Ergebnisses einer zyklischen Redundanzprüfung bzw. CRC-Ergebnisses (334) und einer Übertragungsparameterinformation (336), die einen Kanalqualitätsindikator bzw. CQI und einen Rangindikator bzw. RI beinhaltet, basierend auf dem Datensignal (302) und
Erzeugen, mit einem Algorithmus (312, 400) einer schnellen Verbindungsanpassung bzw. FLA, einer FLA-CSI und eines geschätzten Empfangsblockinformationsraten- bzw. RBIR-Korrelationswerts basierend auf den Kanalschätzungen, wobei der FLA-Algorithmus ausgelegt ist zum Berechnen einer RBIR für jedes Modulations- und Codierungsschema bzw. MCS in einem eingesetzten Satz von MCS und zum Erzeugen der FLA-CSI und des geschätzten RBIR-Korrelationswerts basierend auf der berechneten RBIR;

**dadurch gekennzeichnet, dass** die Verarbeitungsvorrichtung ferner zu Folgendem konfiguriert ist:

Erzeugen, mit einem Erststufen-Algorithmus einer verbesserten langsamen Verbindungsanpassung bzw. Erststufen-ESLA-Algorithmus (316, 700), einer gefilterten CSI basierend auf der FLA-CSI, einem Erststufen-Blockfehlerraten- bzw. -BLER-Ziel und dem CRC-Ergebnis, wobei der Erststufen-ESLA-Algorithmus ausgelegt ist zum Berechnen (718) eines CSI-Anpassungsfaktors basierend auf dem CRC-Ergebnis und dem Erststufen-BLER-Ziel und zum Kombinieren (720) des CSI-Anpassungsfaktors mit der FLA-CSI, um die gefilterte CSI zu erhalten;
Aktualisieren eines CSI-Historienpuffers (1010), wobei der CSI-Historienpuffer eine erste vorbestimmte Anzahl von früheren gefilterten CSI-Werten umfasst;
Aktualisieren eines CRC-Historienpuffers (1010), wobei der CRC-Historienpuffer eine erste vorbestimmte Anzahl von früheren CRC-Ergebnissen umfasst;
Erzeugen, mit einem Zweitstufen-ESLA-Algorithmus (320, 1000), einer Ausgangs-CSI basierend auf der Übertragungsparameterinformation (336) und der gefilterten CSI und des CSI-Historienpuffers, wobei der Zweitstufen-ESLA-Algorithmus ausgelegt ist zum Auswählen eines CSI-Filterparameters (1032, 1036, 1038) aus einem Satz von vorbestimmten Filterkonstanten basierend auf dem CSI-Historienpuffer und zum Berechnen einer Ausgangs-CSI (1040) basierend auf dem ausgewählten CSI-Filterparameter, wobei der FLA-Algorithmus ausgelegt ist zum Erzeugen einer vorhergesagten RBIR basierend auf der berechneten RBIR und zum Auswählen der ersten CSI basierend auf der vorhergesagten RBIR und der CRC-Information und
wobei der Zweitstufen-ESLA-Algorithmus aktiviert wird, wenn die RBIR-Korrelation über einem vorbestimmten Schwellenwert liegt, und umgangen wird, wenn die RBIR-Korrelation nicht größer als die vorbestimmte Schwelle ist; und

Anpassen des Erststufen-BLER-Ziels mit einem BLER-Zielverfolgungsalgorithmus (332, 1100) basierend auf dem CSI-Historienpuffer und dem CRC-Historienpuffer, wobei der BLER-Zielverfolgungsalgorithmus ausgelegt ist zum Berechnen eines Satzes von Verbindungsdurchsatzwerten, die einem Satz von CSI-Werten (1152, 1154, 1156) entsprechen, zum Auswählen des maximalen Verbindungsdurchsatzes aus dem Satz von Verbindungsdurchsatzwerten (1128), zum Berechnen (1130) einer erwarteten BLER basierend auf dem ausgewählten maximalen Verbindungsdurchsatz und dem CRC-Historienpuffer und zum Anpassen (1132) des Erststufen-BLER-Ziels basierend auf der erwarteten BLER und einem ungebundenen Verfolgungsparameter, um eine Arbeits-BLER zu berechnen,

wobei die Verarbeitungsvorrichtung ausgelegt ist zum Durchführen eines Rangindikation-Postprozesses bzw. RI-Postprozesses (340, 600) und

wobei der RI-Postprozess zu Folgendem konfiguriert ist:

Erhalten einer RI aus der FLA-CSI (604);

Anwenden einer Hysterese (606, 608, 610, 618) an der erhaltenen RI, um eine Ausgangs-RI zu erzeugen; und

Aktivieren eines Rücksetz-Flags einer langsamen Verbindungsanpassung bzw. SLA-Rücksetz-Flags (612), wenn sich die Ausgangs-RI von einer vorherigen Ausgangs-RI unterscheidet,

wobei das Aktivieren des SLA-Rücksetz-Flags:

den CSI-Anpassungsfaktor auf Null zurücksetzt (712);

den CSI-Historienpuffer löscht (1008);

den CRC-Historienpuffer löscht (1008) und

die Arbeits-BLER zu einer vorbestimmten Start-BLER einstellt (1110).

2. Sendeempfänger nach Anspruch 1, wobei eine Langzeit-CSI-Statistik (1022) und eine Kurzzeit-CSI-Statistik (1028) basierend auf dem CSI-Historienpuffer bestimmt werden und

der Zweitstufen-ESLA-Algorithmus ausgelegt ist zum Auswählen (1030-1040) der Ausgangs-CSI basierend auf der Kurzzeit-CSI-Statistik und der Langzeit-CSI-Statistik,

wobei die Langzeit-CSI-Statistik der am häufigsten verwendeten CSI bei der ersten vorbestimmten Anzahl von CSI-Werten im CSI-Historienpuffer entspricht (1022), die Kurzzeit-CSI-Statistik der am häufigsten verwendeten CSI bei einer zweiten vorbestimmten Anzahl von CSI-Werten im CSI-Historienpuffer entspricht (1028) und wobei die erste vorbestimmte Anzahl größer als die zweite vorbestimmte Anzahl ist.

3. Sendeempfänger nach Anspruch 2, wobei der Zweitstufen-ESLA-Algorithmus zu Folgendem konfiguriert ist:

Einstellen des CSI-Filterparameters zu einer ersten vorbestimmten Filterkonstante, wenn die Kurzzeit-CSI-Statistik gleich der Langzeit-CSI-Statistik ist (1036);

Einstellen des CSI-Filterparameters zu einer zweiten vorbestimmten Filterkonstante, wenn die Kurzzeit-CSI-Statistik nicht gleich der Langzeit-CSI-Statistik ist (1038); und

Anpassen der Ausgangs-CSI basierend auf dem CSI-Filterparameter (1040).

4. Sendeempfänger nach Anspruch 2 oder 3, wobei der BLER-Verfolgungsalgorithmus:

einen ersten Durchsatz (1154) basierend auf der Langzeit-CSI-Statistik und dem CRC-Historienpuffer bestimmt; eine nächst niedrige CSI auswählt;

einen zweiten Durchsatz (1152) basierend auf der nächst niedrigen CSI und dem CRC-Historienpuffer bestimmt; eine nächst höhere CSI auswählt;

einen dritten Durchsatz (1156) basierend auf der nächst höheren CSI und dem CRC-Historienpuffer bestimmt; den maximalen Durchsatz (1128) aus dem ersten Durchsatz, dem zweiten Durchsatz und den dritten Durchsatz auswählt;

eine erwartete BLER (1130), die dem maximalen Durchsatz entspricht, auswählt;

ein Arbeits-BLER-Ziel (1132) basierend auf der erwarteten BLER und einer vorbestimmten Verfolgungskonstante berechnet und

das Erststufen-BLER-Ziel (1134, 1136) basierend auf der Arbeits-BLER anpasst,

wobei die nächst niedrigere CSI eine CSI ist, die einen niedrigeren Durchsatz als die Langzeit-CSI-Statistik aufweist, und die nächst höhere CSI eine CSI ist, die einen höheren Durchsatz als die Langzeit-CSI-Statistik aufweist.

5. Sendeempfänger nach Anspruch 4, wobei das Erststufen-BLER-Ziel erhalten wird, indem die Arbeits-BLR zwischen einer vorbestimmten minimalen Ziel-BLER und einer vorbestimmten maximalen Ziel-BLER eingeschränkt wird (1134, 1136).

6. Sendeempfänger nach Anspruch 1, wobei, wenn das CRC-Ergebnis ein Bestanden ist, der CSI-Anpassungsfaktor erhöht wird, und, wenn das CRC-Ergebnis ein Fehlschlag ist, der CSI-Anpassungsfaktor verringert wird (718).

**7.** Sendeempfänger nach einem der vorangegangenen Ansprüche 1 bis 6, wobei, wenn eine ausgewählte Rangindikation bzw. RI verwendet worden ist, um das Kommunikationssignal zu übertragen, die FLA-CSI in den CSI-Historienpuffer eingegeben wird, und, wenn sich die ausgewählte RI von der RI, die zum Übertragen des Kommunikationssignals verwendet wird, unterscheidet, ein RI-Flag-Wert in den CSI-Historienpuffer eingegeben wird, wobei der RI-Flag-Wert angibt, dass der Wert von Berechnungen, die den CSI-Historienpuffer einschließen, ausgeschlossen werden sollte.

**8.** Sendeempfänger nach einem der vorangegangenen Ansprüche 1 bis 7, wobei die CSI einen oder mehrere Werte umfasst, die aus der Gruppe ausgewählt werden, die einen Breitband-Kanalqualitätsindikator bzw. Breitband-CQI, einen Teilband-CQI, einen Rangindikator und einen Vorcodierungsmatrixindikator umfasst.

**9.** Verfahren zum Auswählen einer Kanalzustandsinformation bzw. CSI in einem drahtlosen Sendeempfänger, wobei das Verfahren Folgendes umfasst:

Erzeugen von Kanalschätzungen (308), eines Ergebnisses einer zyklischen Redundanzprüfung bzw. CRC-Ergebnisses (334) und einer Übertragungsparameterinformation (336), die einen Kanalqualitätsindikator bzw. CQI und einen Rangindikator bzw. RI beinhaltet, basierend auf dem empfangenen Hochfrequenzsignal (302); Erzeugen, mit einem Algorithmus (312, 400) einer schnellen Verbindungsanpassung bzw. FLA, einer FLA-CSI und eines geschätzten Empfangsblockinformationsraten- bzw. RBIR-Korrelationswerts basierend auf den Kanalschätzungen, wobei der FLA-Algorithmus ausgelegt ist zum Berechnen einer RBIR für jedes MCS in einem eingesetzten Satz von MCS und zum Erzeugen der FLA-CSI und des geschätzten RBIR-Korrelationswerts basierend auf der berechneten RBIR;
**gekennzeichnet durch**:

Erzeugen, mit einem Erststufen-Algorithmus einer verbesserten langsamen Verbindungsanpassung bzw. Erststufen-ESLA-Algorithmus (316, 700), einer gefilterten CSI basierend auf der FLA-CSI, eines Erststufen-Blockfehlerraten- bzw. -BLER-Ziels und des CRC-Ergebnisses, wobei der Erststufen-ESLA-Algorithmus ausgelegt ist zum Berechnen (718) eines CSI-Anpassungsfaktors basierend auf dem CRC-Ergebnis und dem Erststufen-BLER-Ziel und zum Kombinieren (720) der FLA-CSI und des CSI-Anpassungsfaktors, um die gefilterte CSI auszuwählen;
Aktualisieren eines CSI-Historienpuffers (1010), wobei der CSI-Historienpuffer eine erste vorbestimmte Anzahl von früheren gefilterten CSI-Werten umfasst;
Aktualisieren eines CRC-Historienpuffers (1010), wobei der CRC-Historienpuffer die erste vorbestimmte Anzahl von früheren CRC-Ergebnissen umfasst;
Erzeugen, mit einem Zweitstufen-ESLA-Algorithmus (320, 1000), einer Ausgangs-CSI basierend auf der Übertragungsparameterinformation (33) und der gefilterten CSI, der CRC-Ergebnisse und des CSI-Historienpuffers, wobei der Zweitstufen-ESLA-Algorithmus ausgelegt ist zum Auswählen eines CSI-Filterparameters (1032, 1036, 1038) aus einem Satz von vorbestimmten Filterkonstanten basierend auf dem CSI-Historienpuffer und zum Berechnen einer Ausgangs-CSI (1040) basierend auf dem ausgewählten CSI-Filterparameter, wobei der FLA-Algorithmus ausgelegt ist zum Erzeugen einer vorhergesagten RBIR basierend auf der berechneten RBIR und zum Auswählen der ersten CSI basierend auf der vorhergesagten RBIR und der CRC-Information; und
wobei der Zweitstufen-ESLA-Algorithmus aktiviert wird, wenn die RBIR-Korrelation über einem vorbestimmten Schwellenwert liegt, und umgangen wird, wenn die RBIR-Korrelation nicht größer als die vorbestimmte Schwelle ist; und Anpassen des Erststufen-BLER-Ziels mit einem BLER-Zielverfolgungsalgorithmus (332, 1100) basierend auf dem CSI-Historienpuffer und dem CRC-Historienpuffer, wobei die BLER-Zielverfolgungsstufe ausgelegt ist zum Berechnen eines Satzes von Verbindungsdurchsatzwerten, die einem Satz von CSI-Werten (1152, 1154, 1156) entsprechen, zum Auswählen des maximalen Verbindungsdurchsatzes aus dem Satz von berechneten Verbindungsdurchsatzwerten (1128), zum Berechnen (1130) einer erwarteten BLER basierend auf dem berechneten maximalen Verbindungsdurchsatz und dem CRC-Historienpuffer und zum Anpassen (1132) des Erststufen-BLER-Ziels basierend auf der erwarteten BLER und einem ungebundenen Verfolgungsparameter, um eine Arbeits-BLER zu berechnen,

wobei das Verfahren einen Rangindikation-Postprozess bzw. RI-Postprozess (340, 600) umfasst und wobei der RI-Postprozess zu Folgendem konfiguriert ist:

Erhalten einer RI aus der FLA-CSI (604);
Anwenden einer Hysterese (606, 608, 610, 618) an der erhaltenen RI, um eine Ausgangs-RI zu erzeugen;

und

Aktivieren (612) eines Rücksetz-Flags einer langsamen Verbindungsanpassung bzw. SLA-Rücksetz-Flags, wenn sich die Ausgangs-RI von einer vorherigen Ausgangs-RI unterscheidet, und

wobei das Aktivieren des SLA-Rücksetz-Flags:

den CSI-Anpassungsfaktor auf Null zurücksetzt (712);
den CSI-Historienpuffer löscht (1008);
den CRC-Historienpuffer löscht (1008) und
die Arbeits-BLER zu einer vorbestimmten Start-BLER einstellt (1110).


**Revendications**

1. Emetteur-récepteur (1500) utilisable pour sélectionner des informations d'état de canal (CSI), d'une liaison de communication, l'émetteur-récepteur (1500) comprenant :

une unité radiofréquence (RF) (1506) configurée pour recevoir un signal de communication provenant de la liaison de communication et produire un signal de données reçu (302) ;
un appareil de traitement (1502) couplé à l'unité RF (1506) et configuré pour recevoir le signal de données ; et
une mémoire (1504) couplée à l'appareil de traitement (1502),
l'appareil de traitement (1502) étant configuré pour :

générer des estimations de canal (308), un résultat de vérification de redondance cyclique (CRC) (334) et des informations de paramètre de transmission (336) comprenant un indicateur de qualité de canal (CQI) et une indication de rang (RI) sur la base du signal de données (302) ; et,
générer avec un algorithme d'adaptation de liaison rapide (FLA) (312, 400) des CSI FLA et une valeur de corrélation de taux d'informations de bloc reçu estimée (RBIR), sur la base des estimations de canal, l'algorithme FLA étant configuré pour calculer un RBIR pour chaque schéma de modulation et de codage (MCS), dans un ensemble utilisé de MCS, et générer les CSI FLA et la valeur de corrélation de RBIR estimée sur la base du RBIR calculé ;

l'invention étant **caractérisée en ce que** l'appareil de traitement est en outre configuré pour :

générer avec un algorithme d'adaptation de liaison lente améliorée de première étape (ESLA) (316, 700) des CSI filtrées sur la base des CSI FLA, une cible de taux d'erreur de bloc de première étape (BLER), et le résultat de CRC, l'algorithme ESLA de première étape étant configuré pour calculer (718) un facteur de réglage de CSI sur la base du résultat de CRC et de la cible de BLER de première étape, et combiner (720) le facteur de réglage de CSI avec les CSI FLA pour obtenir les CSI filtrées ;
mettre à jour un tampon d'historique de CSI (1010), le tampon d'historique de CSI comprenant un premier nombre prédéterminé de valeurs de CSI filtrées passées ;
mettre à jour un tampon d'historique de CRC (1010), le tampon d'historique de CRC comprenant un premier nombre prédéterminé de résultats de CRC passés ;
générer avec un algorithme ESLA de seconde étape (320, 1000) des CSI de sortie sur la base des informations de paramètre de transmission (336) et des CSI filtrées, et du tampon d'historique de CSI, l'algorithme ESLA de seconde étape étant configuré pour sélectionner un paramètre de filtre de CSI (1032, 1036, 1038) à partir d'un ensemble de constantes de filtre prédéterminées sur la base du tampon d'historique de CSI, et pour calculer des CSI de sortie (1040) sur la base du paramètre de filtre de CSI sélectionné, l'algorithme FLA étant configuré pour générer un RBIR prédit sur la base du RBIR calculé, et sélectionner les premières CSI sur la base des RBIR prédits et des informations de CRC ; et ;
l'algorithme ESLA de seconde étape étant activé lorsque la corrélation de RBIR est supérieure à une valeur seuil prédéterminée, et contourné lorsque la corrélation de RBIR n'est pas supérieure au seuil prédéterminé ; et
ajuster la cible de BLER de première étape avec un algorithme de suivi de cible de BLER(332, 1100) sur la base du tampon d'historique de CSI et du tampon d'historique de CRC, l'algorithme de suivi de cible de BLER étant configuré pour calculer un ensemble de valeurs de débit de liaison correspondant à un ensemble de valeurs de CSI (1152, 1154, 1156), sélectionner le débit de liaison maximal à partir de l'ensemble de valeurs de débit de liaison (1128), calculer (1130) un BLER attendu sur la base du débit de liaison maximal sélectionné et du tampon d'historique de CRC, et ajuster (1132) la cible de BLER de première étape sur la base du BLER attendu et d'un paramètre de suivi libre pour calculer un BLER de travail,

l'appareil de traitement étant configuré pour effectuer un post-traitement d'indication de rang (RI) (340, 600), et le post-traitement de RI étant configuré pour :

obtenir une RI à partir des CSI FLA (604) ;
appliquer une hystérésis (606, 608, 610, 618) à la RI obtenue pour créer une RI de sortie ; et
activer un indicateur de réinitialisation d'adaptateur de liaison lente (SLA) (612), lorsque la RI de sortie est différente d'une RI de sortie précédente,

l'activation de l'indicateur de réinitialisation de SLA :

réinitialisant le facteur de réglage CSI à zéro (712) ;
effaçant le tampon d'historique de CSI (1008) ;
effaçant le tampon d'historique de CRC (1008) ; et
réglant le BLER de travail à un BLER de départ prédéterminé (1110).

2. Emetteur-récepteur selon la revendication 1, dans lequel une statistique de CSI à long terme (1022) et une statistique de CSI à court terme (1028) sont déterminées sur la base du tampon d'historique de CSI, et l'algorithme ESLA de seconde étape est configuré pour sélectionner (1030-1040) les CSI de sortie sur la base de la statistique de CSI à court terme et de la statistique de CSI à long terme, la statistique de CSI à long terme correspondant aux CSI les plus couramment utilisées pendant le premier nombre prédéterminé de valeurs de CSI dans le tampon d'historique de CSI (1022), la statistique des CSI à court terme correspondant aux CSI les plus couramment utilisées pendant un second nombre prédéterminé de valeurs de CSI dans le tampon d'historique de CSI (1028), et le premier nombre prédéterminé étant supérieur au second nombre prédéterminé.

3. Emetteur-récepteur selon la revendication 2, dans lequel l'algorithme ESLA de seconde étape est configuré pour :

régler le paramètre de filtre de CSI à une première constante de filtre prédéterminée lorsque la statistique de CSI à court terme est égale à la statistique de CSI à long terme (1036) ;
régler le paramètre de filtre de CSI à une seconde constante de filtre prédéterminée lorsque la statistique de CSI à court terme n'est pas égale à la statistique de CSI à long terme (1038) ; et
ajuster les CSI de sortie sur la base du paramètre de filtre de CSI (1040).

4. Emetteur-récepteur selon la revendication 2 ou 3, dans lequel l'algorithme de suivi de BLER:

détermine un premier débit (1154) sur la base de la statistique de CSI à long terme et du tampon d'historique de CRC ;
sélectionne des CSI inférieure suivantes ;
détermine un second débit (1152) sur la base des CSI inférieures suivantes et du tampon d'historique de CRC ;
sélectionne des CSI supérieures suivantes ;
détermine un troisième débit (1156) sur la base des prochaines CSI supérieures et du tampon d'historique de CRC ;
sélectionne le débit maximal (1128) à partir du premier débit, du deuxième débit et du troisième débit ;
sélectionne un BLER attendu (1130) correspondant au débit maximal ;
calcule une cible de BLER de travail (1132) sur la base du BLER attendu et d'une constante de suivi prédéterminée ; et
ajuste la cible de BLER de première étape (1134, 1136) sur la base du BLER de travail,
les CSI inférieures suivantes étant des CSI ayant un débit inférieur à celui de la statistique de CSI à long terme, et les prochaines CSI supérieures étant des CSI ayant un débit supérieur à celui de la statistique de CSI à long terme.

5. Emetteur-récepteur selon la revendication 4, dans lequel la cible de BLER de première étape est obtenue par contrainte (1134, 1136) du BLER de travail entre une BLER cible minimale prédéterminée et une BLER cible maximale prédéterminée.

6. Emetteur-récepteur selon la revendication 1, dans lequel, lorsque le résultat de CRC est une réussite, le facteur de réglage de CSI est augmenté et lorsque le résultat de CRC est un échec, le facteur de réglage de CSI est diminué (718).

7. Emetteur-récepteur selon l'une quelconque des revendications précédentes 1 à 6, dans lequel, lorsqu'une indication de rang sélectionnée (RI), a été utilisée pour transmettre le signal de communication, les CSI FLA sont entrées dans le tampon d'historique de CSI et lorsque la RI sélectionnée est différente de la RI utilisée pour transmettre le signal de communication une valeur d'indicateur de RI est entrée dans le tampon d'historique de CSI, la valeur d'indicateur de RI indiquant la valeur devant être exclue des calculs impliquant le tampon d'historique de CSI.

8. Emetteur-récepteur selon l'une quelconque des revendications 1 à 7 précédentes, les CSI comprenant une ou plusieurs valeurs sélectionnées dans le groupe comprenant un indicateur de qualité de canal à large bande (CQI), un CQI de sous-bande, un indicateur de rang et un indicateur de matrice de précodage.

9. Procédé de sélection d'informations d'état de canal (CSI), dans un émetteur-récepteur sans fil, le procédé comprenant :

la génération d'estimations de canal (308), d'un résultat d'un contrôle de redondance cyclique (CRC) (334) et d'informations de paramètre de transmission (336) comprenant un indicateur de qualité de canal (CQI), et une indication de rang (RI), sur la base du signal radiofréquence reçu (302) ;
la génération avec un algorithme d'adaptation de liaison rapide (FLA) (312, 400) de CSI FLA et d'une valeur de corrélation de taux d'informations de bloc reçu estimée (RBIR), sur la base des estimations de canal, l'algorithme FLA étant configuré pour : calculer un RBIR pour chaque MCS dans un ensemble de MCS utilisé, et générer les CSI FLA et la valeur de corrélation de RBIR estimée sur la base du RBIR calculé ;
**caractérisé par** :

la génération avec un algorithme d'adaptation de liaison lente améliorée de première étape (ESLA) (316, 700), de CSI filtrées sur la base des CSI FLA, d'une cible de BLER d'un taux d'erreur de bloc de première étape, et du résultat de CRC, l'algorithme ESLA de première étape étant configuré pour calculer (718) un facteur de réglage de CSI sur la base du résultat de CRC et de la cible de BLER de première étape, et combiner (720) les CSI FLA et le facteur de réglage de CSI pour sélectionner les CSI filtrées ;
la mise à jour d'un tampon d'historique de CSI (1010), le tampon d'historique de CSI comprenant un premier nombre prédéterminé de valeurs de CSI filtrées passées ;
la mise à jour d'un tampon d'historique de CRC (1010), le tampon d'historique de CRC comprenant le premier nombre prédéterminé de résultats de CRC passés ;
la génération avec un algorithme ESLA de seconde étape (320, 1000) de CSI de sortie sur la base des informations de paramètre de transmission (33) et des CSI filtrées, des résultats du CRC, et du tampon d'historique de CSI, l'algorithme ESLA de seconde étape étant configuré pour sélectionner un paramètre de filtre de CSI (1032, 1036, 1038) à partir d'un ensemble de constantes de filtre prédéterminées sur la base du tampon d'historique de CSI, et pour calculer des CSI de sortie (1040) sur la base du paramètre de filtre de CSI sélectionné, l'algorithme FLA étant configuré pour générer un RBIR prédit sur la base du RBIR calculé, et sélectionner les premières CSI sur la base des RBIR prédits et des informations de CRC ; et ; l'algorithme ESLA de seconde étape étant activé lorsque la corrélation de RBIR est supérieure à une valeur seuil prédéterminée, et contourné lorsque la corrélation de RBIR n'est pas supérieure au seuil prédéterminé ; et

le réglage de la cible de BLER de première étape avec un algorithme de suivi de cible de BLER (332, 1100) sur la base du tampon d'historique de CSI et du tampon d'historique de CRC, l'étape de suivi de cible de BLER étant configurée pour calculer un ensemble de valeurs de débit de liaison correspondant à un ensemble de valeurs de CSI (1152, 1154, 1156), sélectionner le débit de liaison maximal à partir de l'ensemble de valeurs de débit de liaison calculées (1128), calculer (1130) un BLER attendu sur la base du débit de liaison maximal calculé et du tampon d'historique de CRC, et ajuster (1132) la cible de BLER de première étape sur la base du BLER attendu et d'un paramètre de suivi libre pour calculer un BLER de travail, le procédé comprenant un post-traitement d'indication de rang (RI) (340, 600), et le post-traitement de RI étant configuré pour :

obtenir une RI à partir des CSI FLA (604) ;
appliquer une hystérésis (606, 608, 610, 618) à la RI obtenue pour créer une RI de sortie ; et

activer (612) un indicateur de réinitialisation d'adaptateur de liaison lente (SLA), lorsque la RI de sortie est différente d'une RI de sortie précédente,

et
l'activation de l'indicateur de réinitialisation SLA :

réinitialisant le facteur de réglage de CSI à zéro (712) ;
effaçant le tampon d'historique de CSI (1008) ;
effaçant le tampon d'historique de CRC (1008) ; et
réglant le BLER de travail à un BLER de départ prédéterminé (1110).

**Figure 1**

200

102

104

**108 - UE**

208 Control Decoding

214 Data decoding

212

216

206 Data Receiving

210

218 Channel Measurement

220

222 Uplink Reporting

**106 – e-NodeB**

220 Downlink Transmission

226 RE allocation

224 MCS selection

**Figure 2**

Figure 3

**Figure 4**

EP 2 959 620 B1

**Figure 5**

600

602
Initialization

616

604
Read RankIn

618
Count=0

Y

606
RankIn==PreRank

N

608
Count+=1

N

610
Count > N_Rank

Y

612
PreRank=RankIn
SlaResetFlag=true

614
Rank = PreRank

346

328

**Figure 6**

700

704

702
Initialization

706
Read subframe info

708
SlaResetFalg==true

Y

N

712
ΔCQI=0

710
alpha=-1

714
ACK Received

N

Y

716
Update alpha

718
Update ΔCQI

720
Select *CQI_SLA1*

318

*CQI_SLA1*

## Figure 7

Figure 8

**Figure 9**

EP 2 959 620 B1

**Figure 10**

**Figure 11**

Figure 12

**Figure 13**

EP 2 959 620 B1

**Figure 14**

EP 2 959 620 B1

**Figure 15**

# EP 2 959 620 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Combined fast link adaption algorithm in LTE systems. **TAO TAO et al.** Communications and Networking in China (CHINACOM), 2011 6th International ICST Confernece on. IEEE, 17 August 2011, 41-420